# EUROPEAN PATENT APPLICATION

(11) **EP 4 265 103 A1**
(43) Date of publication of application: **25.10.2023**
(21) Application number: 22169017.5
(22) Date of filing: 20.04.2022
(51) Int. Cl.: A01G 9/14, G06Q 10/04, G06Q 50/02, A01G 7/00, A01G 9/029

(54) **DISTRIBUTING FEEDBACK DATA FROM THE CONSUMERS IN THE CONTEXT OF GROWING PLANTS IN GROW-UNITS**

(71) Applicant: Harting Systems GmbH, 32339 Espelkamp (DE)
(72) Inventor: EICKE, Sebastian, 32339 Espelkamp (DE); PLEYE, Christof, 32339 Espelkamp (DE); STARKE, Andreas, 32339 Espelkamp (DE)
(74) Representative: Zahn, Matthias

(57) **Abstract**

A computer identifies a particular grow-unit (200-n) in that a particular grow-pad (210-p) with at least one plant (260-p) had been cultivated from seeds. The particular grow-unit (200-n) is located at a particular first physical location (501-D) and the particular grow-pad (210-p) has previously been transported after separation from the particular grow-unit (200-n) to a second physical location (502). The computer receives data that represents a property of the particular grow-pad (210-p) from a computing device (380-c) that is operated by a computer user (390-c). The computer determines the second physical location (502) as the physical location of the computing device (380-c) and determines location candidates (501-A, 501-C, 501-D) for the first location, wherein the location candidates are associated with a threshold-exceeding likelihood that plants corresponding to the particular property have been relocated from the candidate locations (501-A, 501-B, 501-D) to the second location (502). The computer then selects the location candidate (501-D) with the highest likelihood to identify the particular grow-unit (200-n) being the grow-unit at that first location (501-D).

## Description

### Technical Field

In general, the disclosure relates to agricultural processes, in particular the disclosure relates to computer systems, methods and computer-program products to optimize the operation of plant grow-units, and to use feedback information from the plant consumers.

### Background

Greenhouses enable farmers to grow plants under pre-defined environmental conditions, such as temperature or humidity, the application of substances (e.g., fertilizers, nutrients, pesticides, fungicides, disinfectants, etc.), the presence or absence of light in particular spectral ranges, and other conditions.

Many plants should be consumed as soon as they have grown, but the waiting time from removing the plants from the greenhouse and handing them over to consumers is critical. Handling plants in containers (such as trays, pots or the like) is one approach to keep the plants under certain conditions.

A further approach is to miniaturize the greenhouse and to locate it near the consumers. This requires the greenhouse to operate with high efficiency. However, the logistical complexity to provide the necessary environmental conditions is expected to increase.

### Summary

A computer performs a computer-implemented method to identify a particular grow-unit in that a particular grow-pad with at least one plant had been cultivated from seeds. The particular grow-unit is located at a particular first physical location and the particular grow-pad has previously been transported after separation from the particular grow-unit to a second physical location.

In a receiving data step, the computer receives data that represents a property of the particular grow-pad or of the particular plant from a computing device that is operated by a computer user.

In a determining step, the computer determines the second physical location as the physical location of the computing device.

In a determining step, the computer determines location candidates for the first location, wherein the location candidates are associated with a threshold-exceeding likelihood that plants corresponding to the particular property have been relocated from the candidate locations to the second location.

In a selecting step, the computer selects the location candidate with the highest likelihood to identify the particular grow-unit being the grow-unit at that first location.

### Brief Description of the Drawings

FIGS. 1A, 1B and 1C illustrate an overview to a grow-unit;
FIG. 2 illustrates roles to differentiate functions that are performed by persons (or by computers);
FIG. 3 illustrates a flow-chart for a computer-implemented method to generate control signals for controlling the operation of grow-unit;
FIGS. 4A and 4B illustrates grow-pads with various options to carry grow-pad identification numbers;
FIG. 5 illustrates the enhancements of ID data in during various stages, from the production of pad in batches to the removal of the grow-pads from the unit;
FIG. 6 illustrates a flow-chart diagram in an overview to collecting and distributing feedback;
FIG. 7 illustrates a flow-chart diagram for data processing that accompanies the insertion of pads to the unit;
FIGS. 8A and 8B illustrates a flow-chart diagram for data processing that accompanies the handover to the consumer and that accompanies feedback;
FIG. 9 illustrates a plurality of grow units at different locations, as well as illustrates consumer 390 providing feedback;
FIG. 10 illustrates a flow-chart diagram of computer-implemented method to identify a particular grow-unit in that a particular grow-pad had been cultivated; and
FIG. 11 illustrates a generic computer system.

### Detailed Description

### Overview

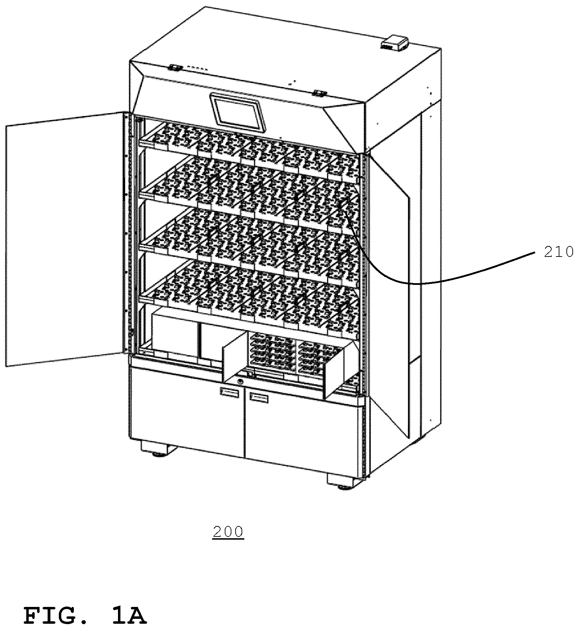

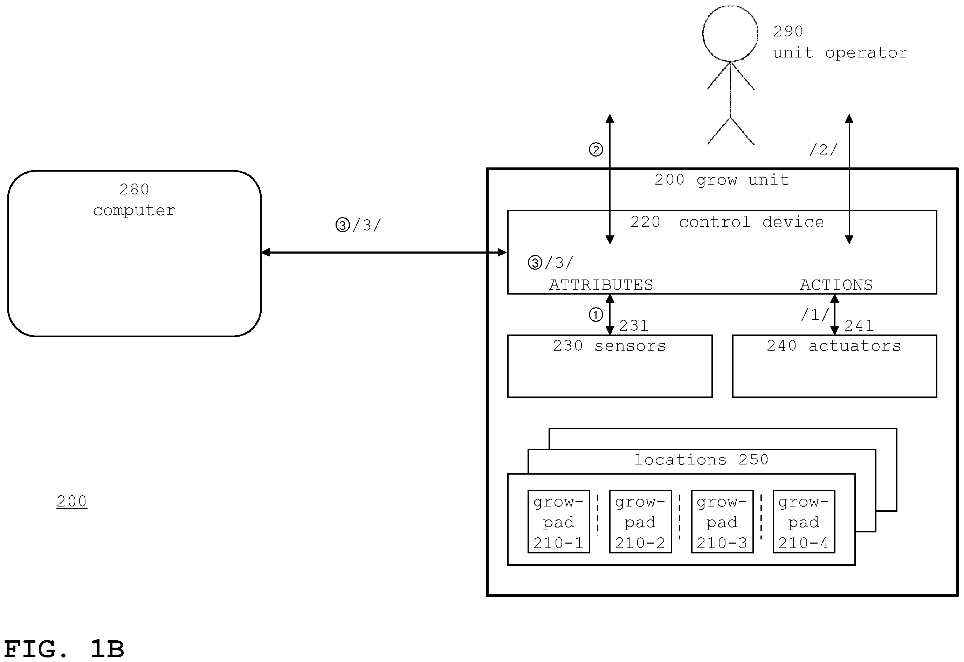

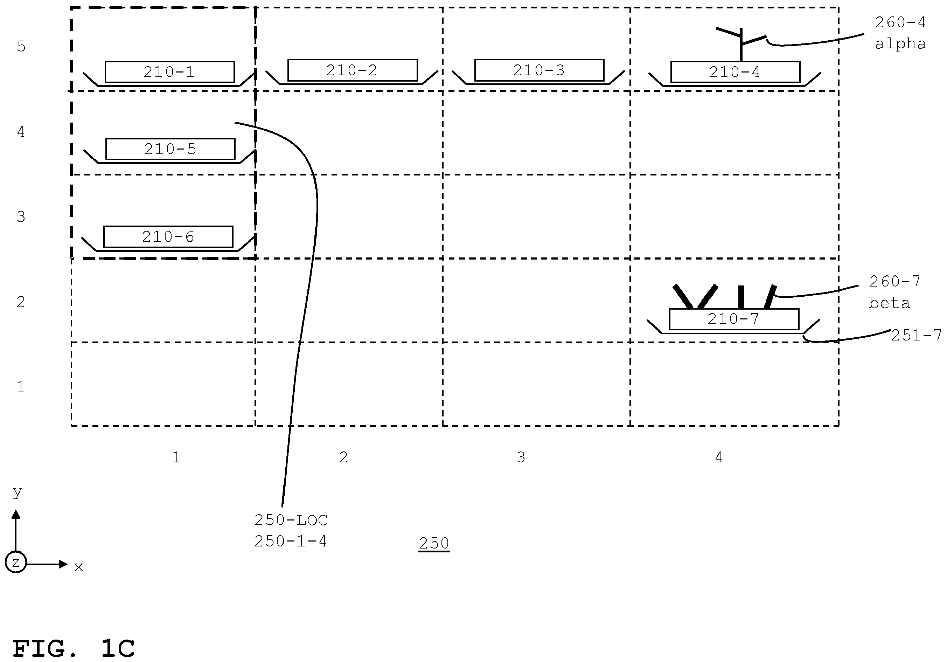

FIG. 1A, 1B and 1C illustrate an overview to grow-unit 200 (or "unit" in short). Grow-unit 200 is a chamber that is configured to grow plants from seeds (or equivalent) that have been embedded into grow-pads. Prior art grow-units are known by terms such as grow cabinets, grow chambers, cultivators or other terms.

FIG. 1A is an overview picture to the construction. Grow-unit 200 comprises a chamber with one or more doors (two open doors in the figure), and at the first glance it appears like a refrigerator or dishwasher (with electrical power supply, with water pipes etc.).

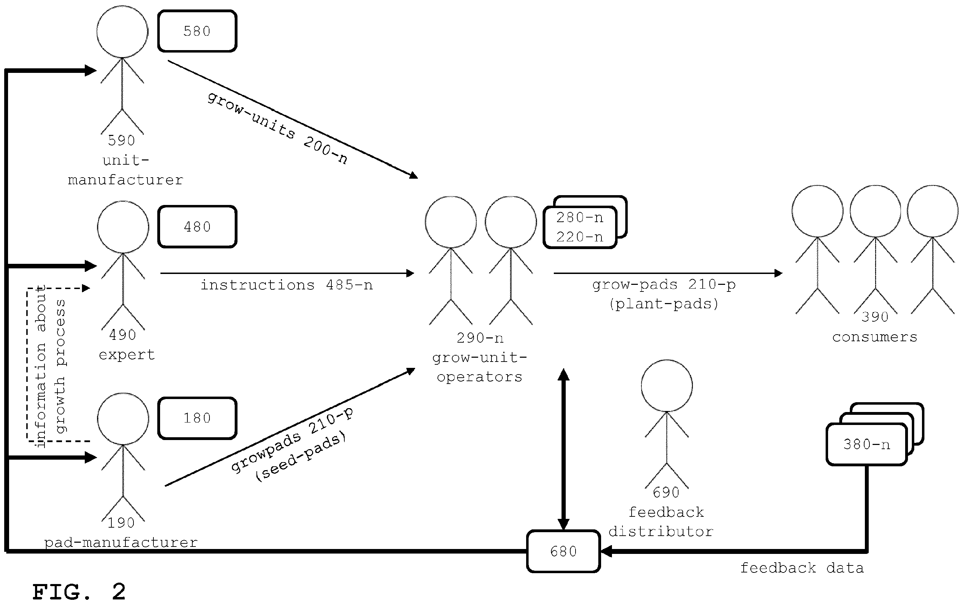

More in detail, grow-unit 200 comprises: mechanical components (such as grow-pad holders), electro-mechanical components (such as grow-pad holders with grow-pad detectors), electro-optical components such as certain sensors. Grow-pads 210 (or plant carriers) are substrates with seeds. Grow-pads 210 are obtained from padmanufacturers (cf. FIG. 2, 190).

FIG. 1B is a block diagram of grow-unit 200 with one or more control devices 220, sensors 230, and actuators 240. Collectively, these components are functional blocks 220/230/240. The skilled person can structurally combine functions. A thermostat is just an example for such a combination. FIG. 1B also illustrates grow-pads 210 that have been inserted to locations 250 within grow-unit 200 (usually one grow-pad per location, here pads 210-1, 210-2, 210-3, and 210-4). As illustrated, unit-operator 290 interacts with grow-unit 200.

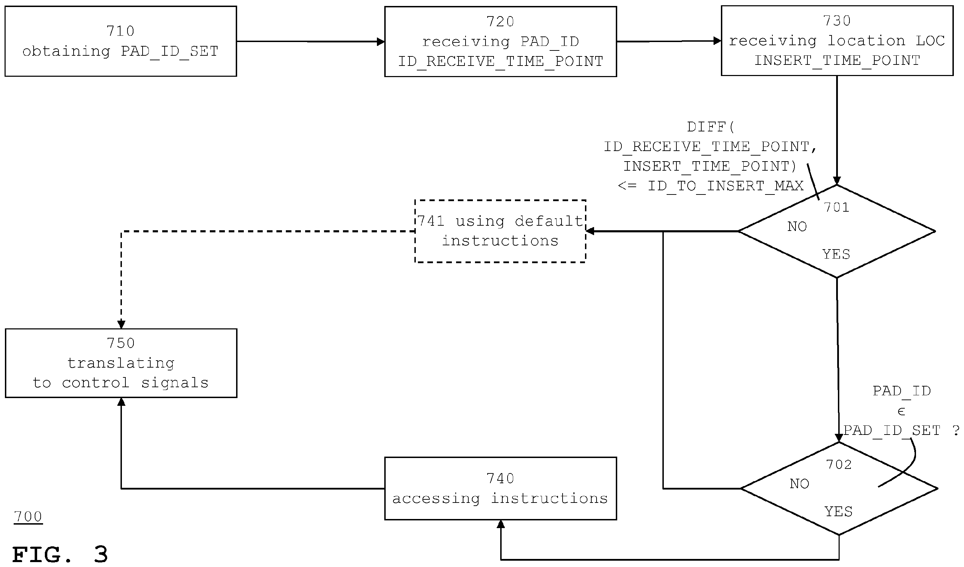

FIG. 1C is coordinate view to locations 250 for grow-pads 210. Grow-unit 200 has locations 250 to hold one or more grow-pads 210. Particular locations are referred to as location 250-LOC (in the example, location 250 with coordinate (x,y) = (1, 4) is such a particular location). As it will be explained, grow-unit 200 can detect when a grow-pad has been inserted to a particular location 250-LOC and this detection information is an indication that is processed by a computer when executing a method (cf. method 700, FIG. 3).

Grow-pads 210 are mechanical items that are usually flat (FIG. 1C shows them in side-view). They have a surface on which seeds are arranged. Grow-pads 210 provide (at least) the following functions:
- at least initially, to carry the seeds (e.g., to work as a substrate for the seeds);
- to allow the plants to locate their roots during grow and thereby to provide mechanical stability;
- to forward water and nutrients; and
- later, to carry the grown plants (e.g., work as a substrate for the grown plants).

As plants grow from seeds (or from biological equivalents such as spores), the grow-pads can initially be called "seed-pads" (i.e., the plant do not yet grow), and can finally be called "plant-pads" (plants are growing or have been grown).

Where appropriate, the description refers to a particular grow-pad 210-p by using index p (from p = 1 to P). Any location is assigned to a unique location ID ("LOC"), unique with respect to the grow-unit 200. Implementations of the locations comprise: shelves, compartments, plant holding means.

A particular grow-unit 200-n can be considered as belonging to a fleet of grow-units n = 1 to N that are operated by different operators. It is also possible to let a single unit-operator 290 interact with multiple units (for simplicity, the description writes "unit-operator", and uses the same index n when identifying particular units and particular unit-operators).

Simplified, once unit-operator 290 has placed one or more grow-pads 210 to grow-unit 200 (or "inserted them into the unit", pads 210-1 to 210-7 are inserted), the seeds (or equivalents) germ into plants and the plants start to grow (or continue to grow). Growing continues during a grow phase (usually a couple of days or weeks). After that phase, unit-operator 290 can then remove pads 210 from grow-unit 200, and the (grown) plants remain on the grow-pad until being harvested. For simplicity, the figures do not illustrate the plants, with the exception of plants 260-4 and 260-7 that grow on grow-pads 210-4 and 210-7, respectively (cf. FIG. 1C).

Within grow-unit 200, actuators 240 provide environment conditions to let the plants on the grow-pads grow. Sensors 230 measure environment conditions (and other conditions) and provide data (such as attributes).

Control device 220 processes data (such as environment data from sensors 230) and controls actuators 240. The skilled person is familiar with control loops or the like. For example, the attribute of the measured temperature ("TEMPERATURE") can be input data ensure that the actual temperature follows a temperature setpoint curve. As used herein, control device 220 also serves as a communication interface to let grow-unit 200 communicate with other computers and with unit-operator 290. The interface function comprises to preliminarily store data (i.e., buffer data) that control device 220 receives or transmits.

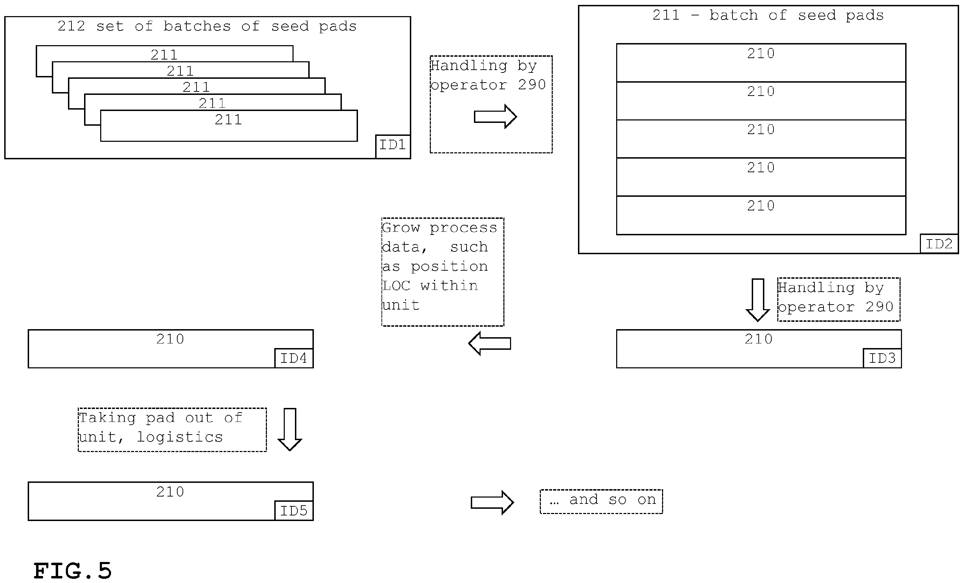

FIG. 5 illustrates the enhancements of ID data in during various stages, from the production of pad in batches to the removal of the grow-pads from the unit.

It is required to handle data which is assigned to one unique grow-pad. Therefore, there is the need to identify an individual pad, which means there is a need to assign an ID to any individual grow-pad (such as the PAD_ID, throughout the mentioned grow phase, and potentially after that phase). The notation 210-p is convenient for one unit, but as mentioned there are multiple units 200-n so that the PAD_ID applies across the units.

However, in some cases there does not exist such an ID at the beginning of the process, for example at the time of shipment of the grow-pads by the manufacturer 190. Grow-pads 210 may be produced batch-wise (cf. FIG. 5, 211), an ID may be only assigned to a batch or even only to a set of batches. If all grow-pads of a batch (or even of a set of batches) have the same ID at time of shipment (or delivery) by the manufacturer, there is a need to use additional information in order to enrich the ID of the batch or the set of batches to create a higher level of granularity, to finally have an ID which is unique for an individual grow-pad 210.

FIG. 5 shows the concept. If, for example, ID1 would be the original ("first") ID of the set 212 of batches 211, then during handling the set of batches and during splitting the set of batches into single batches 211, appropriate information, for example, the time of splitting, the geolocation, a unit-operator ID (i.e., such as index n in 290-n), and so on is used to enrich ID1 to create ID2. In the further course when again splitting batch 211 into single grow-pads 210, a similar procedure is repeated. For example, again the time stamp, the geolocation, unit-operator ID (may be a different person than in the first split), grow-unit ID etc. is used to even more refine the ID, to create ID3 out of ID2. A similar procedure can subsequently be carried out several times in order to be able to uniquely identify exactly this one(!) grow-pad until it will be finally harvested by the consumer (cf. FIG. 2, 390). Various methods of technical implementation of these ID enrichment steps are described below by respective execution examples. Another method to assign a unique ID to the grow-pad would be to use a physical ID of a tray, where the tray serves as a carrier for the grow-pad. The grow-pad can be inserted at any time into the tray and at the same time all information which already has been assigned to the grow-pad ID - at an arbitrary granularity level - will be assigned to the tray ID.

The description focuses on data (cf. the arrows in FIG. 1B). Inside grow-unit 200, data can comprise attributes that represent particular parameters, and data can comprise control signals 241 that are directed to actuators 240, at a level of granularity which is suitable or necessary for the current process step, for example, to handle one parameter assigned to one individual grow-pad. Outside grow-unit 200, data can be attributes and/or control signals, in many cases at a granularity level that is more aggregative, for example, data related to a set of commonly grown plants.

FIG. 1B (and FIG. 2) shows grow-unit 200 with two computers: control device 220 (within grow-unit 200) and computer 280 (outside grow-unit 200). This convention is convenient, but this does not mean that the computer would be co-located with the grow-pads or within equipment (i.e., the unit).

As used herein, the notation "the computer" (in singular, without reference) stands for a computing function or stands for a function of a computer-implemented module. The functions can be distributed to different physical computers. For example, control device 220 and computer 280 are implemented by separate computers. The skilled person may introduce further classification such to use the term "edge computer" for control device 220 (because it is physically associated with the unit) and "cloud computer" for computer 280 (because such as computer would be located remotely to the unit). However, the physical location of the computer is not relevant. Individual sensors and actors may comprise their own computers (i.e., micro-computers, Internet of Things / loT computers etc.) but they are omitted here for simplicity. Nevertheless, such sensor/actuator computers may receive control signals 231/241, may provide attributes etc.

The figures also illustrate a computer program or a computer program product. The computer program product - when loaded into a memory of a computer and being executed by at least one processor of the computer - causes the computer to perform the steps of a computer-implemented method. In other words, the program provides the instructions for the modules.

From a different perspective, the figures illustrate the modules of a computer system comprising a plurality of function modules which, when executed by the computer system, perform the steps of the computer-implemented method.

The skilled person can store the instructions (in permanent storage, or in volatile memory) such that unauthorized access substantially to the instructions can be prevented. To name only a few applicable measures, the skilled person can use encryption / decryption, can physically store at least some instructions of keys in dedicated memory hardware (known as "software protection dongle"). Such measures may also prevent accidental mis-use of instructions.

### Plant sorts

As used herein, the term "plant" comprises plants (such as vegetables) and items that are similar to plants (such as eatable mushrooms).

Plants can be cultivated in different sorts, such as dill, parsley, chives and others. The skilled person can find the appropriate dimension so that the plants fit the unit. As the particular plant sort does not matter, the description uses the fictitious plant sorts alpha, beta and gamma. For example, in FIG. 1C plant 260-4 could be an alpha plant, 260-7 could be a beta plant.

### Data communication

Technical equipment (such as the unit, the computers) communicate via communication channels that are well-known in the art. The description therefore refers to communication by mentioning protocols by example only, for the communication between hardware components (i.e., computers, sensors, actuators, pads etc.).

The skilled person is able to implement short-range communication by wireless technology, such as Bluetooth, radio-frequency identification protocols (RFID), by near-field communication (NFC).

Communication is also available for example, as wireless local area network (WLAN or WiFi, such as networks according to the IEEE 802.11 standard series, local area network LAN (implemented, for example, by Ethernet or otherwise).

Also, the transmission of (analog) signals by wires is possible. The skilled person is also familiar with buses (like in industrial machines) and/or the optical and optoelectronical transmission of signals.

The skilled person can consider grow-unit 200 as an industrial machine and can select further other communication channels accordingly. Human-computer communication is well-known. Therefore, user interfaces (with displays, keyboards, touch-screens, control or warning lamps, loudspeakers for acoustical signals or for instructions to users) are omitted from further description.

Visual information can be communicated (to and from the units) by bar codes (that is frequently used at the point of sale in retail), or QR-code (quick response code, that is rather used by users with mobile devices, smart phones). The skilled person can provide and read visual information otherwise, for example, by alphanumeric characters (that are readable to human users). By way of example, FIG. 1A shows grow-unit with a user-interface at the top.

Units can communicate with (other) computers (cf. FIG. 2) by state-of-the art data communication and standardized protocols. The communication can use protocols that are described by Open Systems Interconnection model (OSI) layers, such as http, https, ftp or others.

### Roles

Growing plants from pads in the grow-unit can be considered as one process among a number of interrelated processes that are performed by different entities.

Differentiating roles here in the description is convenient because, from a high level perspective,
- (computer-readable) instructions (to the grow-units) can be made available conditionally so that grow under non-optimized conditions may be prevented, and
- feedback information between roles can generally improve the processes (the grow process in particular).

FIG. 2 illustrates roles 190, 290, 390, 490, 590 and 690. The description uses roles to differentiate functions that are performed by persons. As used herein, the term "person" also stands for a team of persons, or stands for an organization. Two or more roles can be performed by the same person, and one and the same role can be performed by two or more persons. Automation is possible, at least partially, so that persons can act as supervisors.

Pad-manufacturer 190 symbolizes the function to manufacture and to deliver grow-pads 210 to unit-operator 290 (cf. the arrow symbol, the grow-pads are still seed-pads). (Index p symbolizes that the pads are identifiable).

Unit-manufacturer 590 symbolizes the function to manufacture (and to deliver) the grow-units 200 to unit-operators 290 (cf. the arrow symbol as well).

Unit-operator 290-n has the role to operate a particular grow-unit 200-n. For example, the role of unit-operator 290 can be performed by different persons, who are on duty at different working hours. The figure illustrates two different instances of the roles (290-n) for different units, for example, for units that are located in different cities. As already explained, grow-pads 210 turn from "grow-pads" into "plant-pads", and unit-operator 290-n hands over them to consumers 390.

Consumers 390 have the function to consume the plants, with details to be explained below.

Expert 490 is familiar with growing plants on pads, and expert 490 defines the grow process in detail. Expert 490 describes the grow process by computer-readable coding or "instructions 485" (to the operators, to the units). The figures add index n to symbolized that the instructions 485-n can be unit-specific. Defining and describing instructions 485 can be separate to sub-roles that are performed by different persons, for example, by a gardener and by a programmer. The gardener and the programmer could be different persons that are associated in the same organization (such as in a company that provides plant grow consulting). The gardener and the programmer sub-roles can be performed by the same person.

Feedback distributor 690 distributes feedback information from consumers 390 selectively to roles 190, 290, 490 and 590. Although distributor 690 is formally illustrated by a symbol of a person, distributing feedback does not require the interaction with human users. It is contemplated to implement the feedback distribution role by computers only.

Further, combining roles is possible, for example, expert 490 can be associated with the company that manufactures the units (unit-manufacturer 590). In such settings, role 490/590 provides the units (i.e., units 200, hardware) and the instructions (i.e., instructions 485, other software to unit 200). This is convenient in practical implementations, because unit-operator 290 has only one company (expert and programmer, unit-manufacturer in one) to interact with.

FIG. 2 also illustrates that each role uses computers, such as computer 180 (by pad-manufacturer 190), computer 280/220 (by unit-operator 290, more details in FIG. 1B), computer 480 (by expert 490), computer 590 (by unit-manufacturer 590), computer 380 (frequently mobile devices or other computing device, by consumers 390), and computer 680 (by feedback distributor 690).

It is possible to simplify the role model by (further) combining roles, for example, in assuming that the roles 190 (pad-manufacturer), 490 (expert), 590 (unit-manufacturer), and - optionally - 690 (feedback distribution) can be implemented by a role that in relation to unit-operator 290 appears as a supervisor.

### Description for two themes

In the following, the description introduces some definitions but will soon separate the two high-level themes "unit-operation" and "feedback-system" into two large parts.

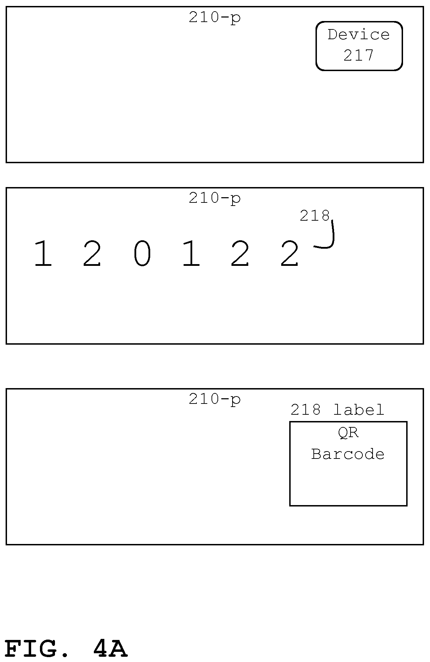

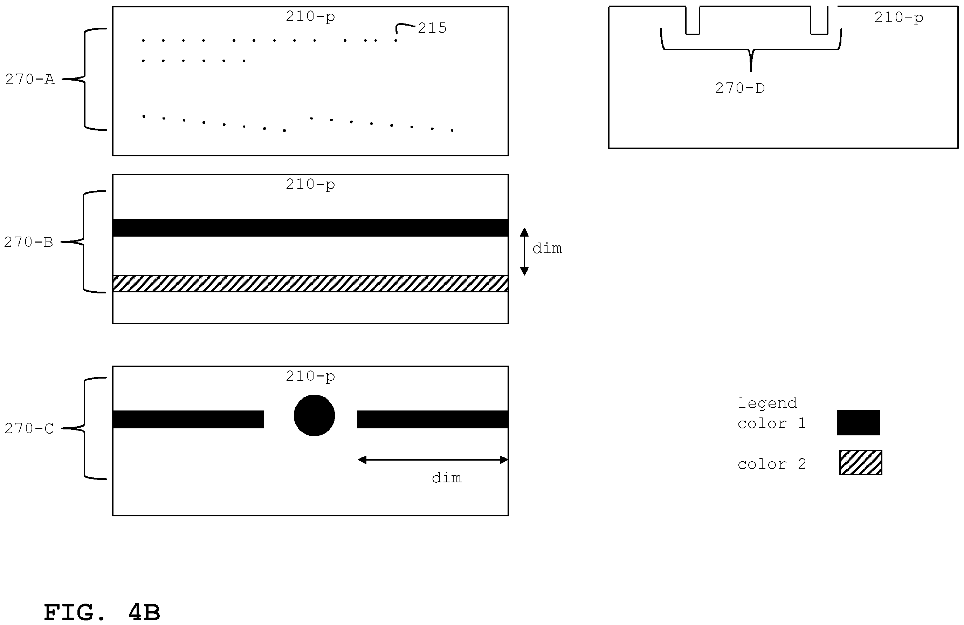

The description introduces some constraints that are mainly related to the operation of the unit. With FIG. 3, the description presents method 700 to generate control signals for controlling the operation of grow-unit 200, so that grow instructions 485 (cf. FIG. 2) can be made available conditionally. The method is executed by computer 220 or 280, or by both computers in combination. As computer 220 may be located within grow-unit 200 it is alternatively called "control device" (cf. FIG. 1B). Computer 280 is located outside grow-unit 200. With FIGS. 4A and 4B, the description then explains details for method step to receive an identification number (PAD_ID).

The description then turns to the feedback-system theme (methods 800, 600), by investigating identification logistics that are a major aspect in distributing feedback.

### Action, determinations, instructions etc.

As used herein, an "action" is an activity that acts on the plants. Such activities comprise, for example, to switch on a heater, to switch it off, to activate light or to place the plants into darkness, to supply water to the plant, to drain water from the grow-unit etc. Actions are performed by actuators, and optionally by human users. It is however desired to avoid human actions whenever possible.

Actions can be differentiated into direct actions and indirect actions. Directly acting to the plant comprises, for example, to change the temperature within the grow-unit to influence the grow. Indirectly acting comprises, for example, to open the grow-unit so that potentially more light shines to the plant, for a certain time.

As illustrated in FIG. 1B, control signals 241 (or "control commands") go from computer 220 to an actuator (e.g., signal to switch on the heater, open a valve). Control signals 231 go from computer 220 to a sensor (e.g., to interrogate the sensor to determine an attribute). For both signals 231 and 241, the belowexplained /1/ /2/ /3/ modalities apply. It is also possible, that the control signals 231/241 are generated by computer 280 (cf. FIG. 1B).

As used herein, a "determination" is an activity to obtain attributes (i.e., representations of parameters etc. in a computer). There can be different reception modalities:
modality ①: A sensor can measure a value, such as a temperature.
modality ②: A user may input data through a user interface.
modality ③: A further computer may provide the attribute.

In terms of computer technology, actions can be regarded as "setters" and determinations can be regarded as "getters".

Actions and determinations follow pre-defined sequences, targets, directions, and conditions. For example, the actions "insert the grow-pad" and "supply water to the grow-pad" follow a particular sequence (but not vice versa), the action "remove the grow-pad" is only performed when the plant have a reached a particular color (of the leaves).

In view of the above roles, expert 490 defines the grow process by identifying actions and determinations (i.e., any activity to determine attributes) and by turning them into programs (i.e., instructions 485). In other words, in performing the expert role 490, the gardener writes the specification (of the grow phase) and the programmer writes the corresponding code (i.e., instructions 485).

The translation from specification to code may take particulars of the grow-unit into account. For example, the specification may simply require the action to keep a particular target temperature, but the code may be more specific to obtain the temperature (measure) and to (conditionally) activate a particular heater.

Expert 490 can provide instructions 485 in form of a programming language that is understandable both by humans and by computers. There is - however - no limitation to languages, the programmer may even use a graphical programming tool that symbolized particular actions, conditions, sequences and so on by graphical symbols on user interfaces.

The description occasionally uses pseudo-code in uppercase style, to symbolize instructions 485, such as GET_TEMPERATUR (an instruction to obtain the temperature attribute by measuring, a "determination"), SET_TEMPERATUR (an instruction to let the grow-unit heat up or cool down to a particular temperature, and "action"), IF THEN ELSE (and instruction that represents conditions) and others. Uppercase letters also indicate attributes.

Instructions 485 are usually communicated (from expert computer 480 to grow-unit 200) in blocks with multiple instructions, for example, an instruction block can comprise
SET_TEMPERATUR,
SET_LIGHT,
SUPPLY_WATER.

More in detail, the instructions can specify details (temperature 30 °C, the color of the light and the duration of application, the amount of water, etc.).

### Instructions and control signals

Grow-unit 200 processes instructions 485, and a further translation is mentioned. Control device 220 interacts with the sensors and with the actuators at a different technical level.

As mentioned, control device 220 controls actuators 240. Control device 220 would process an instruction 485 such as SET_TEMPERATUR (30°C) by routines such as to actually measure the temperature (also to obtain the attribute TEMPERATURE (LOC | t) = 20°C, to switch on the heater, to measure the temperature again, and so on.

Such intra-device translations are known in the art. The skilled person is also familiar with operating control device 220 to select alternatives.

For example, the instruction KEEP_LIGHT (12/12) would trigger the control device to generate control signals to sensors and actuators: to measure the light (i.e., to determine the attribute LIGHT), to switch on a lamp (i.e., the action to use artificial light), to open a shutter (i.e., the action to let sun-light or other environmental light in), to switch off the lamp, to close the shutter and so on, do obtain a light / dark cycle with intervals of equal (12 hour) length.

In a further example, the instruction SUPPLY_WATER (20), instructs the grow-unit to supply water in the (fictitious) amount "20", but the control grow-unit triggers activities of water meters, valves, water pressure sensors and the like.

### Constraints and approaches to address them

As there is a desire to obtain plants at pre-defined quality and quantity, but - from a high-level perspective - there are some constraints that require special attention.

There are different approaches to support pre-defined quality (also quantity) of the plant. The description continues by referring to constraints and to approaches that are related to the unit. The description labels the constraints by placing them in parenthesis.

### (Complexity)

(problem) As the plants on the grow-pads are sensitive to environmental conditions (such as temperature, humidity and many other parameters), the environment should be within pre-defined settings, otherwise the plants do not grow as desired. The parameters are complex, and there is a risk that human users (such as users working as unit-operator 290) could control the grow-unit such that the environment conditions may leave the pre-defined settings.

(solution) Therefore, the interaction between unit-operator 290 and grow-unit 200 can be restricted to interactions for that the impact on the plants is minimal. In such a minimalistic scenario, unit-operator 290 would insert the grow-pads, would ensure that the grow-unit is connected to resources (such as to electrical power and water), would wait for a pre-determined time interval (i.e., the grow phase, measured in days and weeks) and would remove the grow-pads (cf. FIG. 5 take out). But otherwise, the control interaction would be kept at a minimum. Grow-unit 200 would operate according to pre-defined instructions 485 that provide optimal conditions (that are specific to the plants).

### (Sorts)

(problem) As the plants can be of different sorts, the environmental conditions can be different for each sort. Alpha plants may grow under different conditions as beta plants. There is a requirement to run the pre-defined instructions specific for specific sorts of plants. However, even if sort-specific instructions are available, there is a risk that the wrong instructions could be applied to the wrong plants. Unit-operator 290 may visually inspect the grow-pad (prior to insertion) but may not understand the sort. In other words, the seeds for alpha and beta plants may look similar, and at least a non-expert user would not see a difference.

(solution) Particular data handling is part of the solution. Checks to the authenticity of the grow-pads (and/or the origin of the grow-pad from a particular source) before the grow-unit starts to operate. The method addresses this topic by checking identification numbers. ID numbers can be linked to the sorts, by computertechniques such as data-binding. The risk of confusion is minimized.

### (Sort specific conditions)

(problem) Not all grow-units 200 (N units, of the fleet) may be able to provide suitable environmental conditions for all plant sorts. For example, a particular grow-unit may be suitable for growing alpha plants or beta plants, but not suitable for growing gamma plants. As the grow-pads are standardized in mechanical size, there is a risk that pads are inserted to non-suitable units. Errors may not be detected immediately, but with a delay of some days. For example, the grow-unit may not be able to successfully grow gamma plants, but a "gamma pad" may have been inserted already. As a consequence, the gamma plants may be spoiled.

From the perspective of the grow-pads, they are adapted to perform in units that are adapted to pads (that are standardized in mechanical size etc.). Or, the units may be adapted to particular pads. For example, a grow-pad is designed for alpha plants that would grow in relatively warm air. Such a grow-pad should not be inserted to a grow-unit that does not support such warm air. More in general, padto-unit compatibility is important.

(Solution) Sort-to-unit compatibility (or unit-to-sort compatibility) can be provided by adapting the method (cf. 700): accessing pre-defined instructions and translating them to control signals can be made conditional upon matching pre-defined compatibility definitions (e.g., alpha and beta suitable for unit 200-with a particular unit ID, but not suitable for GAMMA. The condition checks can be implemented by instructions 485, in pseudo-code such check could read as: "CHECK: IF SORT = ALPHA OR SORT = BETA THEN PROCEED ELSE ...". The ELSE alternative for non-compatibility can lead to a warning (action "ALERT_THE_OPERATOR" or the like), to a default operation or the like.

A unit-to-sort check could also read as: "CHECK: IF unit = alpha-able or unit = betaable THEN ... ELSE ...". The skilled person can identify further implementations.

The sort is known to the computer (220/280) because the pad-manufacturer can store the sort in relation to the PAD_ID.

### (Sort specific incompatibilities)

(problem) Some sorts may be incompatible with each other. For example, plants of a first sort may grow to a size that prevents plants of a second sort. Unit-operator 290 may not be aware of such plant behavior.

(solution) Expert 490 can consider such compatibility topics in instructions 485, for example, by checking the physical distances for grow-pads that the operator has just inserted to the unit (checking via location sensors). The computer can output hints to the operator (in the sense to place the pads of different sorts to particular locations). The instructions can comprise text (or other media) to be presented to the operator to place particular pad to particular locations, within the unit.

### (Sort specific substances)

(problem) As the plant can be of different sorts, the application of chemical substances can be different for each sort. In other words, there is a pre-defined substance-to-sort relation. For example, gamma plants may require the application of a particular fertilizer. But applying substances in a non-defined relation may cause harm to the plant. In the example, a particular fertilizer may not be suitable for alpha plants.

(problem, alternative view) The application of chemical substances can be different for each plant sort also in terms of quantity and timing. For example, the application of hydrogen peroxide as an antiseptic follows predefined amounts at pre-defined times.

(solution) Data consistency checks and feasibility checks can be applied, and instructions (due to the logical link to the ID numbers) can be sort-specific as well. For example, expert 490 programs the instruction SUPPLY_FERTILIZER (Alphafertilizer) only for SORT = ALPHA accordingly.

### (Adaptation)

(problem) Growing plants is a biological process, and process repetitions are usually different from each other. The instructions should therefore be adaptable. Adapting the treatment is a topic for the above-mentioned expert 490, but unit-operator 290 is not an expert (at least not in all cases). Instructions can not be static.

(solution) The instructions can be made modifiable to adapt the grow process, according to feedback (that is collected, for example, from the consumers, cf. FIG. 2).

In a further aspect, data may serve to improve the operation (of the unit). Data can be collected to be used as historical data (machine learning etc.). The expertise is out-sourced to an entity that is not necessarily the unit-operators 290 (e.g., to expert 490 or to pad-manufacturer 190).

### (Feedback identification)

Using feedback is optional, but data processing that supports feedback distribution (cf. role 690) can be related to the operation of the grow-unit (i.e., both themes are related).

(problem) As feedback data could be obtained from consumers 390 (cf. FIG. 2), the feedback (with quality data) would have to be specific to particular pads (and their processing in the unit). This requires identification at a level of granularity that exceeds the granularity (by that the pad-manufacturer) delivers the grow-pads.

(solution) The identification of a grow-pad can be enhanced as a combination of a particular series (in manufacturing the grow-pads) and a particular grow phase (the time between insertion to and removal from the unit).

(solution) Additionally, or in an alternative, the identification of the grow-pad can be also prepared by the pad-manufacturer (PAD_ID). The grow-unit-manufacturer can also be contribute grow-unit information (such as a serial or other ID of the unit).

(solution) After the grow phase the grow-pad is removed from the grow-unit and can be inserted to a tray. The identification the grow-pad then can be done by using a unique ID of the tray as long as the grow-pad is not taken away of the tray. In this case, the tray ID and the grow-pad ID are linked together at the time of removing. From that time, every data which has been assigned to the grow-pad ID so far, can be linked to the tray ID. With this, the consumer can assign his feedback to this tray ID. Cross-check routines by the computer will verify if the tray ID is plausible. Such cross check routines may use the handover time, geolocation, etc.

### (Plant interaction)

For simplicity, it is assumed that the grow-pads are made for seeds for one sort only (e.g., alpha pads such as grow-pad 210-4, beta pads such as grow-pad 210-7, cf. FIG. 1C).

(problem) Plants may interact with each other. In a fictitious example, alpha plants would not be compatible with beta plants for growing at the same time.

Therefore, growing non-compatible plants should be prevented. However, this requires the application of rules, and the above-introduced complexity is applicable here as well.

(solution) Instructions can comprise checks to identify non-compatibility, such checks have already been explained above (in the context of plant-unit compatibility).

### (Retail scenarios)

Unit-operators 290 may operate grow-units 200 within retail stores. Electronic techniques are more and more in use, such as RFID or other NFC.

(problem) However, the hardware, such as antennas and chips, may create a health hazard (its non-biological parts must not mix up with the plants). The use of electronics may not be suitable, at least not to identify individual pads.

(solution) In an optional implementation, pads are identified by components that are not problematic (such as paint), or by components that are part of the grow-pad in any case (such as seeds), cf. FIGS. 4A and 4B.

### (Mix up risk)

(problem) As mentioned, the grow-unit-manufacturer provides instructions 485 to unit-operators 290 (such as the high-level instructions described above). Some of the instructions are technical rules to operate the units, such as rules to operate the grow-unit specific to specific plant sorts. But there is a risk that the operators mix up the instructions. For example, the above mentioned 30 °C air at a 12/12 light/dark rhythm may be suitable to alpha plants, but not for gamma plants.

(solution) By performing the method (cf. FIG. 3), the computer applies the instructions that fit to the grow-pads (and therefore to the seed/plants on the grow-pads).

### (Operation conditions)

(problem) Unit-operator 290 may have inserted non-suitable pads (or suitable pads to non-suitable units).

(solution) The start of the grow phase (i.e., the operation of the units) can be made conditionally. Method 300 comprises steps to check conditions.

### (Online not all of the time)

(problem). While it would be possible for the manufacturers (especially, pad-manufacturer 190, or any other party or role) - in theory - to process attributes and to identify actions for each grow-unit 200-n separately, such online control would depend on the availability of uninterrupted data communication.

(solution) There is no need to establish an online connection all of the time. Instructions and identification number sets (PAD_ID_SET, cf. the method) can be buffered, and condition checks do not relay on permanent connections.

### (Operating the unit)

From an overall perspective and simplified, pad-manufacturer 190 provides pads 210 and informs the unit-operators 290 about the PAD_ID (in a set of allowed PAD_ID_SET). Grow-unit 200 checks if an "allowed" grow-pad has been inserted (pad belongs to a pre-defined set of pads PAD_ID_SET). Grow-unit 200 starts the operation (to grow the plant) provided that the PAD_ID fits to the PAD_ID_SET.

In other words, grow-unit 200 operates under the condition that authentic pads have been inserted. The condition check is supported by a computer-implemented method to be explained in the following.

### Method

FIG. 3 illustrates a flow-chart for computer-implemented method 700 to generate control signals (cf. 241, 231 in FIG. 1B) for controlling the operation of grow-unit 200.

As explained above, in connection with FIGS. 1A, 1B and 1C, grow-unit 200 is a chamber that is configured to grow plants 260 from seeds that have been embedded into grow-pads 210. (Seeds are illustrated, by way of example with reference 215 in FIG. 4B).

Method 700 is executed by computer 220 (i.e., by the control device in FIG. 1B), by computer 280 (i.e., the computer outside grow-unit 200, cf. FIG. 1B), or by interaction of both computers.

In step obtaining 710, computer 220/280 obtains a set PAD_ID_SET of pre-defined identification numbers. Identification numbers are not limited to digits (0 to 9), but can comprise other differentiators such as letters (e.g., A to Z).

In step receiving 720, computer 220/280 receives - at first time point lD_RECElVE_TlME_POlNT - an identification number PAD_ID that is related to a particular grow-pad 210. Identification number PAD_ID had been associated with particular grow-pad 210 by pad-manufacturer 190 previously. Examples for such associations are explained with FIGS. 4A and 4B.

In step receiving 730, computer 220/280 receives - at a second time point INSERT_TIME_POINT) - the indication that particular grow-pad 210-p has been inserted to a particular location 250-LOC within the grow-unit 200. Predefined locations are discussed with more detail below.

Computer 220/280 checks two conditions. The flow-chart illustrates that the check can be performed serially. The check order does not matter. Condition (i) can be checked first, and condition (ii) can be checked second, or vice versa. Both checks can also be performed in parallel (i.e., simultaneously).

Condition 701 is complied ("YES") if the time interval ID_TO_INSERT between the first and the second time points (the time between ID_RECEIVE_TIME_POINT, INSERT_TIME_POINT) is shorter than or equal to a pre-defined time interval ID_TO_INSERT_MAX. Condition 701 mirrors the activities by the operator. It is more likely that the operator identifies the PAD_ID and then inserts the grow-pad to the unit, without significant delay. The time interval (i.e., its max threshold) can be determined in advance by watching operators (e.g., with a stop clock to measure typical activities).

Condition 702 is complied ("YES") if the received identification number PAD_ID is an element (cf. ε in the figure) of the set of grow-pad of pre-defined identification numbers PAD_ID_SET.

For compliance of both conditions (701, 702, logical AND), computer 220/280 accesses (step accessing 740) pre-defined instructions 485 that are applicable for particular location 250-LOC and that are related to the set of identification numbers PAD_ID_SET.

In step translating 750, computer 220/280 translates the accessed pre-defined instructions 485 to control signals 241, 231 for grow-unit 200.

In the example of FIG. 1C, grow-pads 210-1, 210-2, 210-3, 210-4, 210-5 and 210-6 (with alpha plants) have been inserted to particular locations, and the control signals apply to these particular locations. Grow-pad 210-7 (with a beta plant) uses a different particular location, for that different instructions / signals do apply.

The flow-chart also illustrates the NO-branch. If a condition 701 or 702 fails, the computer may use default instructions 741 that would be translated as well (step 750). It may provide control signals that correspond to default operation (such as creating an environment that do not harm the plants, such as informing the unit-operator, the pad-manufacturer etc.) Or, if at least one of the conditions 701, 702 is not complied with, the computer would not provide the control signals.

Some unit-operators may record IDs from previous operations, but for a relatively short ID_TO_INSERT_MAX interval (e.g., 24 hours), the changes that some operators will remember valid PAD_ID and re-used them is minimized.

Method 700 does not necessarily involve the operator, so that information (PAD_ID and PAD_ID_SET) does not have to be disclosed to the operator.

### Security aspect and origin of the set

In performing method 700, computer 220/280 can obtain the PAD_ID_SET (of grow-pad identification numbers PAD_ID, step 710) via a secure data-connection (i.e., a connection that is optimized for the security goals: privacy (confidentiality in the communication to computer 220/280), authenticity (the set originating from a predefined source such as from a particular pad-manufacturer, but not from non-authorized sources), integrity (no modification during the communication), and others. The skilled person can implement appropriate measures that support these goals, such as using data encryption and data decryption.

The computer that provides PAD_ID_SET is selected from the following alternatives:
- A computer (cf. computer 180 in FIG. 2) that is associated with the pad-manufacturer 190 and that is communicatively coupled to the method-executing computer 220.
- A computer (cf. computer 180 in FIG. 2 as well) that is associated with the pad-manufacturer (190). The set can be obtained together with receiving instructions 485.
- Computer 220/280 can obtain PAD_ID_SET from an enclave within a computer for that a remote computer (e.g., computer 180) that is associated with the pad-manufacturer 190 has exclusive write access. In that sense, the enclave is the computer that provides the PAD_ID_SET.

In performing method 700, computer 220/280 can obtain (step 710) the set PAD_ID_SET otherwise, such as by calculating the identification numbers in the set according to a pre-defined rule and according to a pre-defined start value, under control of a computer that is associated with the pad-manufacturer. In such a scenario, computer 180 would transmit the rule and the start value to computer 220/280.

In a much simplified example for such a step execution, the set comprises all integer numbers from 10.000 (start) to 20.000 (rule to add 1 until 20.000). In a more sophisticated example, the set comprises 6-digit numbers with digits 0, 1, 2 and 3 (cf. "120122" in FIG. 4A would comply).

Optionally, computer 220/280 can obtain the set by identifying the members of a mathematical group (e.g., set with operation that combines any two elements to produce a third element of the set). Group rules (such as basis numbers) can be obtained from computer 180. Such an approach may be advantageous, because checking the set membership condition 702 can be implemented by computerresource saving calculations.

### Structural details and coordinates

To further illustrate the grow-unit and the method, the description continues by describe details.

As illustrated in FIG. 1C, the grow-pads are placed to locations on the shelves. In embodiments, grow-pad 210 can be mechanically connected to the shelve via connector 251 (here for the example as connector 251-7 holding grow-pad 210-7 with plant 260-7).

As illustrated in FIG. 1C, the grow-pads can be arranged horizontally. This is convenient for explanation, but not required. The grow-pads can be placed horizontally, in a slope, or even vertically.

When referring to a particular location, the description uses the acronym "LOC". The locations can be described by coordinates, and it is convenient to use a Cartesian system, but the skilled person can use a different system.

In such a coordinate system, particular locations can logically be identified by Y rows (i.e., corresponding to shelf boards) and X columns (i.e., sections). For example, there could be Y = 5 rows (or floors, or stores, or shelve boards) with X = 4 locations each. (x, y) coordinates with integer counters are convenient for (loc). Counting y button up and counting x left to right is just an example. The description assumes that the locations are of equal size, this convenient, but not required.

There is a certain analogy to computer hardware. Circuit boards (corresponding to the "pads") are horizontally or vertically inserted into slots ("locations", with connectors) of racks ("units"). However, the analogy fails, at least on the following: the rack provides substantially equal environment conditions (in terms of power supply, heat dissipation etc.) and the selection of a particular slot does not have influence the operation of the computer.

### Location specific details

While pads can be manufactured substantially identically (same size, weight, plant seeds, sort etc.), the seeds and plants on two different pads (or from pads from different batches) may grow differently.

By way of example, one reason can be that the temperature shows a gradient across different locations within the unit. The temperature (or any other parameter) may differ from row to row, or the temperature within a row can different from a location on the left side to a location on the right side.

A location matrix {x, y} (or {x, y, z}, or in other coordinate systems) can be defined as a computer data-structure that represents the physical locations (LOC, that grow-unit 200 identifies for inserted pads). Since the locations are fixed, representing the locations by row index y and column index x is convenient (lowercase letters). Much simplified, the location matrix {x, y} can be a matrix with X ^{∗} Y elements (uppercase letter for the numbers), in the example, a 4 ^{∗} 5 matrix.

As used herein, the description assumes that grow-pads 210 are standardized in size so that there can be logical assignment of one particular grow-pad to one particular location (1-to-1 assignment). The maximal number P of pads (in the grow-pad at the same time, per unit) corresponds to the maximal number of locations that is P = X ^{∗} Y.

The skilled person may expand the grow-unit in z-direction and turn twodimensional (x, y) coordinates to three-dimensional (x, y, z) coordinates. In other words, the granularity of the location matrix can be expanded. The skilled person can also apply coordinates that are common for describing furniture (width, height, depth, in any order).

It is convenient to define location groups, for example, a group may correspond to one row, a group may correspond to one column, or a group may correspond to a collection of locations (cf. the bold ..., usually contiguous). A group can also correspond to all X^{∗}Y locations.

As used herein, LOC or (x, y) or even (x, y, z), collectively stands for a particular location or a particular location group, or "location (group)". The description may be specific: (x, #) stands for a particular column, (#, y) stands for a particular row (cf. (5, y) in FIG. 1C), and so on. (#, #) stands for all locations. Location collections would be identified as [], such as [(1, 5), (1, 4), (1, 3)] identifying the group of locations occupied by pads 210-1, 210-5 and 210-6.

Inserting a grow-pad to a (free) location inside the grow-unit turns a "standard pad" into a living organism which fate is related to the unit, and especially to the position within the unit. In other words, the grow-unit turn into a combination of locations and one more pads.

### Parameters, attributes and modalities

As used herein, the term "parameter" stands for a characteristic that may influence the plant grow (from seed to plant) on the grow-pad. There are
- (a) unit-specific parameters that can be associated with the grow-unit (e.g., associated with locations in the grow-unit such as locations 250, or even particular locations 250-LOC, FIG. 1C),
- (b) pad specific parameters (e.g., a size of the grow-pad, the plant sort of the grow-pad, the age of the grow-pad at insertion time, the manufacturing of the grow-pad (e.g., how old), and
- (c) handling-specific parameters, grow-pad within the grow-unit (e.g., at what temperature during the grow phase).

Such a classification is convenient for explanation, but a particular parameter can be specific for multiple aspects in combination. For example, the temperature can be a parameter that is relevant for the grow-pad, for the grow-unit and for the handling.

Parameters can also be related (a) to the locations within the grow-unit (no matter if a grow-pad has been inserted or not), (b) to the time, and (c) to handling modalities. Since the parameters may influence the plant grow differently, the accuracy and granularity of setting parameters in time and space can be different. For example, humidity may apply to the grow-unit as a whole and may change relatively slowly, wherein light can be applied to particular locations with a relatively fast changes.

As the plant grow can be described by states, parameters can also be characteristics for particular states. For example, for a plant that is growing (that is a status parameter), its height is a characteristic parameter.

Not all parameters turn into data - but as used herein - parameters that are represented by a computer data are called "attributes". The description notes them by uppercase (such as "ATTRIBUTE" in general, or "TEMPERATURE" in an example). Locations are identified by coordinates LOC (or (x, y)), and

The progress of time is identified as (t) or TIME, with t representing a particular point in time TIME_POINT. (YYYYMMTTHH can stand for the calendar time that means for an absolute time, in the granularity of hours HH, this is convenient to save bits and bytes. The skilled person can use other time-stamps.

The skilled person can also track time points more accurately, for example by adding minutes and seconds. The description uses the coarse notation for simplicity.

It is convenient to use a common time zone such as UTC especially when a fleet of units is active in geographic locations). The skilled person derive relative time intervals as well (such as by calculation the DURATION interval from inserting the grow-pad to removing the grow-pad by simply calculating the difference between two absolute time points (INSERT_TIME_POINT, REMOVE_TIME_POINT).

For example, the notation (LOC, TIME_POINT) stands for a combination of space (one or more particular location(s)) and time points. It is convenient, to track time points for substantially all attributes, but that is not required.

A computer may receive ATTRIBUTES (LOC, TIME_POINT) in different reception modalities. FIG. 1B illustrates 3 modalities.

In a sensor modality ①, the computer receives attributes from sensors. As illustrated, control device 220 (i.e., a computer) receives attributes from sensors 230. Simplified, a sensor may measure a parameter (e.g., the temperature parameter turns to the temperature attribute). The arrow between control device 220 and sensors 230 is bi-directional, this symbolizes that control device 220 can instruct sensors 230 to provide data.

In a user modality ②, the computer obtains attributes by user interaction. As illustrated, there is a link from unit-operator 290 to control device 220, with a bi-directional arrow symbolizing interaction in both directions. The skilled person can provide user interfaces (Ul), and the figure omits them for simplicity. For example, unit-operator 290 can identify the locations LOC that hold pads.

In view of the above-mentioned interaction restriction, there is a tendency to avoid user modality and to prefer sensor modality.

In a computer modality ③), the computers exchange attributes. For example, control device 220 (usually part of grow-unit 200) exchanges attributes with computer 280 (usually external to grow-unit 200). Exchanging attributes comprises to (preliminarily) store attributes. As it will be explained, not all attributes have to be exchanged. There is a tendency to process (and store) attribute locally (i.e., by the unit, control device 220) and to limit data exchange.

Reception modalities can be combined with each other.

Attributes can be specific to a particular location (LOC) and to a particular point in time TIME_POINT. Data does not have to be collected for individual locations, the description mentions data (and sensors) with applicability to location groups (or to the grow-unit as a whole).

A location specific attribute can be the presence or absence of pads at a particular location (or location group). As used herein, the attribute is a binary attribute defined as PRESENCE (LOC) = TRUE (a grow-pad has been inserted), and PRESENCE (LOC) = FALSE (the location is empty). In other words, PRESENCE is an example, for an attribute having binary values (TRUE and FALSE). For example, PRESENCE (#, #) = TRUE represents the grow-unit full with pads. Looking at the reception modality, the attribute PRESENCE (LOC) is conveniently obtained by user interaction (②unitoperator 290 and user interface) or from sensors (i.e., grow-pad presence sensors).

A location specific attribute can be the time point by that a particular grow-pad has been inserted to (or removed from) a particular location, such as INSERT_TIME_POINT (LOC) = YYYYMMTTHH, REMOVE_TIME_POINT (LOC) = YYYYMMTTHH). The modality can be that of the PRESENCE attribute. As mentioned, the time can be indicated with higher accuracy.

A further location specific attribute can be the sort of the grow-pad, for example, in FIG. 1C, the sort would be SORT (4, 5) = alpha.

The description will explain further attributes below, but takes a short excurse to non-attributes: grow-unit 200 can comprise further sensors and actuators with functions that are not related to plant grow, or for that the relation is unknown. For example - similar as in a refrigerator - a door switch may turn on an inspection light when the door opens. It is assumed that the door is open for relatively short time intervals, so that the influence of an open door or the influence of the inspection light to plant grow can be neglected. However, data representing the door status (and/or the inspection light status) can be handled as if they would be attributes.

The skilled person is able to arrange the data collection by suitable hardware (depending on the reception modality)

### Attributes by example

Determining an attribute is an activity. In the following, the description explains some attributes by way of example.

Some attributes are related to particular grow-pads ("pad attributes"), some attributes to the grow-unit as a whole ("unit attributes"). The grow-unit attributes can be differentiated into internal and external attributes. The differentiation is however not strict, some attributes relate to both (pads and unit).

From a different perspective, some attributes are related to the grow process (and such process-related attributes can be grow-pad attributes or grow-unit attributes).

The attribute LIGHT can represent the light that reaches the plant. Light intensity sensors can measure the intensity of light. It may not be possible to apply light homogeneously to all location, it may be advantageous to measure light in view of space.

There is however no need to provide one sensor per location, and the skilled person can derive information. For example, LIGHT (#, 5, t) stands for the light measured by a sensor in row 5 (sensor modality), at a particular point in time t. Likewise, light spectrum sensors obtain the attribute SPECTRUM (LOC, t) operate accordingly (sensor modality only). Sensors or both types (for both attributes) can even by combined.

The attribute TEMPERATURE can be obtained by temperature sensors (I.e., thermometers, PT100 sensors etc.) that measure the temperature. The skilled person can estimate location specific temperatures, such as TEMPERATURE (#, 5, t) in row 5 at the top, TEMPERATURE (#, 1, t) in row 1 below and so on. The sensor modality has preferences here.

The attribute HUMIDITY can represent humidity. The attribute is an example, for so-called sub-attributes: Some sensors can measure the air humidity HUMIDITY_AIR, and other sensors can - optionally - measure the humidity of the grow-pad HUMIDITY_PAD. The sensor modality has the preference here.

The attribute AIR_FLOW can represent the movement of the air inside the unit. As air flow may influence the plants (or the grow of the plant), if can be convenient to measure this. For example, some plants may be sensitive to draught air.

The attribute CO2 can represent the share of a particular gas in the unit. Sensors are available in the art, the skilled person would not make the measurement location specific, but would rely on the sensor modality. The description uses CO2 as a placeholder for other gases that are part of the air.

The attribute SOUND represents sound in general. Sensors can measure vibrations, such as air vibrations (i.e., sound measured by microphones) and vibrations of the unit. Conveniently, sound can be measured by frequency and by intensity. Derivative attributes are possible, such as attributes that represent sound pressure at particular frequencies.

The attribute PRESENCE represents the presence or absence of pads at particular locations LOC at particular points in time. The skilled person can provide individual sensors per pad, sensors for multiple pads and so on. It is also possible, to detect further status information, such as the incorrect insertion of a grow-pad to a connector: grow-pad insertion sensors determined if pads are inserted according to pre-defined standards or not. In such embodiments, the attribute can have further values, not only TRUE for presence and FALSE for absence, but - for example - ERROR for pads that are inserted only partially, or FLIPPED for pads that are inserted with upside down. The applicable reception modalities are sensor and user modalities.

For particular points in time, the attributes can indicate states (of the unit, of the grow-pad etc.), but state transitions can be represented by attributes as well. For example, the action "insertion" changes the PRESENCE attribute from FALSE to TRUE, the action "removal" changes this from TRUE to FALSE. Derivatives (such as DURATION, etc.) have already been discussed above.

The attributes INSERT, PRESENCE and REMOVE (and others) can be enhanced by the PAD_ID (that is associated with the grow-pad by the pad-manufacturer). Concerning the reception modality, the PAD_ID can be obtained by sensors and user interaction. Optionally, the unit-operator can make a photo of the grow-pad being inserted or being removed (or shortly before, or shortly after), and the computer can identify the PAD_ID and the time point.

Attributes can be multi-sensor attributes, for example, the presence sensor can interact with the camera, or the presence sensor can trigger user interaction. Or, in a further example, the data-enhanced attribute CURRENT_GROW_DURATION can be defined as the time interval between INSERT_TIME_POINT and CURRENT_TIME_POINT.

For every point in time (such as CURRENT_TIME_POINT), the computer can calculate how long the grow-pad is already in the unit. The accuracy depends on the grow speed of the plants, the interval can be measured in day DD or hours HH, but in many situations it would not have to the gives by minutes MM.

The time interval between INSERT_TIME_POINT and REMOVE_TIME_POINT can be defined as the FINAL_GROW_DURATION, again conveniently given in DD and HH.

Attributes can be related to location ("LOC" in general). For determining the location, the sensor modality in convenient. Some units may not have location sensors but would be able to obtain such location-specific attribute through user interaction (for example, the unit-operator would simply enter location data into the computer via a user interface.

Computer modality has preference for obtaining attributes, for example, the time interval that has lapsed from insertion can be calculated but can also be obtained manually (user modality).

The attribute AGE: AGE (LOC) indicates the age of the grow-pad (for example from manufacturing, adding the seed to the substrate), at the time point when unit-operator 290 inserts the grow-pad (being an attribute). AGE (LOC) remains constant. AGE (LOC) is a typical example for data that does not have to collected from sensors, usually the computer modality applies here.

Attribute SIZE (LOC, t). It can be contemplated to use pads with different size, and it is therefore possible to detect the size, usually in categories, such as small, S, medium M and large L. Modalities are sensor modality and user modality.

The attribute NEIGHBOR (LOC) can indicate the presence or absence of pads in a vicinity of a particular location. Conveniently it can be given in binary terms: TRUE (the neighboring location "LOC-1" or "LOC+" is occupied by a pad, or FALSE). More specifically, the neighboring location can be specified with more detail. (This attribute is conveniently used to check for plant-to-plant compatibility.)

The attribute NUTRITION data is supplied by a sensor that measures the amount of nutrients, or supplied by the computer evaluating data (such as data regarding the chemicals added to the unit).

The description introduces the attribute OTHER_OBSERVATIONS to mention data that can be collected otherwise. For example, the computer can receive an indication that a plant has a particular color and can apply rules (that use other attributes) to derive an evaluation. For example, the indication ("plant is white", via user interface), in combination with AGE, DURATION etc. Can lead to the evaluation: mold fungus present. Or, in a different example, a camera can make a photo and the computer (or a person) applies a rule to determine that the grow-pad are ready to be removed. Applying such rules can be part of the instructions.

Attribute WATER (Some pads may have a built-in water storage, and the attribute relates the amount of water that is being stored at a particular point in time.

Having explained attributes (i.e., data) for grow-unit 200, the description now continues by explaining attributes and their relation to actions.

ATTRIBUTE UNIT_LOCATION. The unit-operator might physically relocate the unit. For example, in a shop, the grow-unit may be moved to a location at window to a location in a store-house without windows. As with other technical equipment, some conditions might change. The grow-unit can no longer benefit from natural light, but the water supply may be available at higher water pressure. Such and other factors might become relevant and might become even decisive for the plant quality, so it is therefore possible to track the grow-unit location. The skilled person can apply suitable measures, in the sensor modality, by a location sensor by regularly interacting with the unit-operator (via a user interface) to check the location and so on.

### Derived attributes

The computer can derive further attributes. For example, PRESENCE (x, y) = 0 for a particular location in combination with WATER_FLOW (x, y) = 1 for the same location would lead to a WATER_ERROR (x, y) attribute (water flows through an empty location). If instructed, device 220 can trigger the action ALERT_THE_OPERATOR and make the error visible to the unit-operator.

### Actions by actuators, and or by unit-operator

Looking at the actuator, some actions are explained in the following. The skilled person can provide suitable hardware, and can arrange that the hardware is being controlled from control device 220 (or from a different computer).

The following actuators are just given as examples: light sources (implemented by technologies such as LED, laser, incandescent light bulb, fluorescent lamps), UV light sources (e.g., the light sources in particular spectrum), shutters (in windows, to let ambient light in or block it), ozone generators, (circulating, dosing) pumps (such as for water, air), valves, nozzles, tanks, ventilators (for provide air flow), intake and exhaust air conducts, irrigation systems (I.e., a combination of multiple actors, and sensors), heaters (based on electrical energy, such as with peltier elements, heater element with resistance wires in form or coils or spirals; access to central heating in the building with pipes and valves); cooling devices (or air conditioning in general), vibration generators (to apply vibration, for example to remove insects that sit on the plants),

In a broader sense, some actuators act indirectly user interface elements (such as displays, loudspeakers, lamps) to provide interaction with the operator, the example of emergency information should be mentioned here, a further example, is the collection of attributes via the user modality.

As used herein, grow-unit 200 can receive control commands (ACTIONs) to activate (or deactivate) a particular actuator 240. (or the ACTION is part of an instruction at a high-level, to reach a particular effect. The description will explain actions with particular actuators but there can be an abstraction layer in the control device. For example, the action SET TEMPERATUR can be defined by the function (to reach a particular temperature), but the control device can translate the action into control signals, such as to switch on an electrical heater (being an actuator) or to open a valve from a hot air pipe (the valve being the actuator).

In many scenarios, the ACTION can be an instruction to control device 220 that translates the command to a more actuator specific signal. To name a control loop example, for the ACTION_SET_TEMPERATURE = 30°C, the control device would process a temperature value from a temperature sensor and would activate a heater until the target temperature has been reached.

Looking at the function, the action is set by 490, and the specific interaction between sensors, actuators etc. within the grow-unit are set by 590.

The communication of such control commands can be differentiated by action modality: For the device modality /1/, control device 220 sets the ACTION. For the user modality /2/, unit-operator 290 sets the ACTION. In view of the above limitation, this should be avoided. For the computer modality /3/, computer 280 (or any other external computer) set the ACTION.

SUPPLY_WATER This action is an example that corresponds to the above-mentioned instruction to supply water. Actuator 240 can be valve at a water supply (tank or water tap). The action can be specified to apply a particular amount of water, to refill water to reach a pre-defined threshold and so on. For example, applying 100 liters of water can be written as SUPPLY_WATER (20 liters).

For SET_LIGHT, suitable parameters are , for example, the wavelength of the applied light, intensity, duration). For example, control device 220 may control an actuator to apply light SET_LIGHT (....). The light can be specified - depending on the actuators - with details such as spectral composition, Color temperature (in Kelvin), flux (in Lumen), Illuminance in Lux) and others.

The action can be associated in a control loop that measures light (cf. attribute LIGHT) and actuators such as LEDs, or shutters on windows. Light can be UV light.

### Higher-level instructions, language-style instructions

The instruction (for example, program, or pseudo-code) SET_TEMPERATURE (#, #) = 30°C; SET LIGHT (12 hours)" would be the instruction to have the temperature at 30°C at substantially all locations #, # with an 12 hour light / darkness repetition. (This fictitious action would correspond to the spring or autumn equinox days.)

The skilled person can use other syntax, and alternative writing could be: SET_TEMPERATURE to 30 °C; SET LIGHT ON FOR 12 HOURS.

The grow-unit parses, reads the instructions, and identifies actions. grow-unit-manufacturer 590 can convert instructions to lower-level control comments (and other data).

SET TEMPERATURE to 30 translated into the activation of a feedback loop from a sensor to a heater.

SET_LIGHT translates the action to monitor the available light and to open/close shutter, switch on or off light sources, etc. Using light sensors etc. The skilled person

The expertise in growing plants successfully can be related to the instructions. Grow-unit 200 can store such instructions (e.g., in control device 220). However, if grow-unit 200 receives the instructions from external computers (such as from computer 280 in FIG. 1B from computer 180 in FIG. 2)

### Constraints

### (Expertise in instructions)

(problem) As already mentioned for the roles, expertise to grow plans in units can be implemented in the instructions. The instructions comprise technical rules. To give one example, SET_LIGHT may specify to apply light in a particular setting, but such and other instructions may be subject to eavesdropping by unauthorized third party.

(solution) protecting the instructions from being intercepted by non-authorized parties, encryption etc.

### (Non-authorized instructions)

(problem) As explained above, plant grow may be specific (to particular sorts etc.), but instructions may have been faked.

(solution) Having explained constructional aspects and constraints in relation to a single grow-unit 200, the description now explains the context of an eco-system.

### Receiving the PAD_ID

The description now explains how computer 220/280 can perform receiving step 720 (to receive the grow-pad identification number PAD_ID). There are multiple options, and PAD_ID becomes an attribute.

Computer 220/280 can receive the grow-pad identification number PAD_ID from sensor 230 that is associated with grow-unit 200.

Computer 220/280 can receive the grow-pad identification number PAD_ID from a user interface that is associated with computer 220/280 (i.e., the computer that performs the method). In a practical scenario, unit-operator 290 reads PAD_ID from a packaging (e.g., from the box) and inputs the PAD_ID via the user interface.

Computer 220 (i.e., control device) can receive the grow-pad identification number PAD_ID from a user interface that is associated with a particular grow-unit 200-n (cf. FIG. 1A).

FIGS. 4A and 4B illustrate grow-pad 210 with details that show how pad-manufacturer 190 had been associated the grow-pad identification number PAD_ID with grow-pad 210-p (index, p within a particular unit) and how computer 220/280 can receive the particular grow-pad identification number PAD_ID.

As illustrated by FIG. 4A, pad-manufacturer 190 can provide label 218 on grow-pad 210-p (or on a container by that grow-pad 210-p is being transported to particular grow-unit 200-n). FIG. 4B shows label 218 as a number written to the surface of grow-pad 210-p (in the example, PAD_ID = "120122") or as QR-code or as a bar code.

Computer 220/280 receives PAD_ID through interaction with unit-operator 290 (of grow-unit 200), and/or through a label sensor.

FIG. 4A also illustrates that PAD_ID can be provided by electronic device 217 (RFID, NFC-tag, Bluetooth Beacon, etc.). Using electronic device 217 may be advantageous because reading the data from the device does not require to read the data visually.

Labels or devices are not required for the plants to grow, and labels or devices turn into waste (once the PAD_ID was read). The description describes further options, that avoid such disadvantages.

As in FIG. 4B, pad-manufacturer 190 can have associated the grow-pad identification number PAD_ID with grow-pad 210-p by coding PAD_ID in arrangement 270 of sensor-visible items on the surface of the grow-pad 210-p. The figure shows arrangement 270 in alternatives 270-A, 270-B, 270-C and 270-D. Computer 220/280 receives grow-pad identification number PAD_ID by de-coding arrangement 270 from an image of the surface taken by sensor 230. The items are "sensor-visible" in the sense that they are optically recognizable by sensor 230 (i.e., an optical sensor) that is a camera or a scanner. In other words, the items on the surface and the surface itself reflect light at different wavelengths.

Image processing techniques are known in the art, and optical character recognition (OCR) and image classification (by neural networks) are given as prominent examples.

The arrangement of sensor-visible items can be implemented, by the following options:
Option (1): Arrangement 270-A is an arrangement of seeds 215 (or equivalent to seeds) that encode the grow-pad identification number PAD_ID by being embedded to the grow-pad (201-p) along a geometrical pattern. The figure symbolizes this pattern by lines that can be straight lines, circles, triangles and so on. Patterns can also be differentiated by distances and angles between the lines (cf. the two slope lines) and by the absence or presence of seed at pre-defined places. The figure shows a line with 4 seeds, with a gap, with 4 seeds, again with a gap, with 4 seeds (2 of them are more closer to each other). Option (1) applies a synergetic approach because it uses the seeds for the further purposes to provide the PAD_ID. The skilled person is able to use appropriate technologies. For example, techniques to place relatively small items to relatively large surfaces are known (electronics to printed circuit boards etc.).
Option (2): Sensor-visible items 270-B, 270-C can be made by paint that is distributed on the surface of grow-pad 210-p to form sensor-visible elements that encode the grow-pad identification number (PAD_ID) by the shape of the visible elements and by the distances between them. Lines, circles, triangles and other shapes are possible (chess-board etc.). The distances between the lines, the thickness of the lines, and the color of the lines can encode the PAD_ID as well, cf. the dimensions "dim". The skilled person understands that using paint does not harm the grow-pad and does not create a hazard (to the consumer).
Option (3): Sensor-visible items can be made by punch holes 270-D on at least one edge of the surface. The punch holes encode the grow-pad identification number PAD_ID by the presence or absence of punch holes in predefined positions.
Option (4): Sensor-visible items can be made by holes 270-E on the surface of grow-pad 210-p. The holes encode the grow-pad identification number PAD_ID by the size of the holes and the distance between the holes and/or to the edge of grow-pad 201-p.
Option (5), not illustrated: In a variation to option (2), the grow-pad can have differently colored threads interleaved in the grow-pad.

Each option can support code that can differentiate a maximal number of different PAD_ID. In a trivial example, option (2) can code PAD_ID = "White" and PAD_ID = "Black" for differently colored surfaces, for a maximal number being 2. In a more practical example, options (1) or (2) may code up to 1.000 different PAD_ID.

The options can be combined, thus potentially increasing this maximal number. There are limitations. Option (1) is limited by the minimal physical distances between two seeds, and potentially by the "loss" of seeds. Option (3) and (4) are limited because holes make the grow-pads less stable.

FIG. 4A and 4B illustrates grow-pad 210 in implementations with a manufacturerassociated PAD_ID (cf. step receiving PAD_ID, in method 700). The manufacturerassociated PAD_ID is read-only. (It is noted that in some implementations, this identification can be applied to several pads in a series, or in a batch, but the description assume different PAD_ID for different pads.) Pad-manufacturer 190 may store the IDs in the database, with details regarding the delivery of the grow-pads to operators (such as SHIPMENT, BOX_ID, SORT and others). A collection of stored IDs can serve as PAD_ID_SET (cf. step obtaining grow-pad set, in method 700).

As explained, there are several options. The option can be combined to have redundancy and or to accommodate in the reading capabilities of the unit-operator vs. the consumer, but that is not required.

In other words, the options can be selected according to the modalities to read this PAD_ID (cf. FIGS. 4A and 4B).

The PAD_ID can be an ID for temporal use only (cf. ID_TO_INSERT_MAX, in method 700).

### Option A)

Visual identification (cf. arrangements 270-A, 270-B, 270-C, 270-D). The manufacturer applies color directly to the grow-pad, in a particular arrangement or pattern, such as in dots, stripes, circles, or other pattern elements. The pattern can be applied to the front side (the side with the seeds), or to the back side (the opposite side). A camera sensor can take a photo of the grow-pad, and a computer can apply optical character recognition (or other techniques). In a variation, the unit-operator can recognize the pattern and can interact with a computer (such as computer 280) to identify the pattern (e.g., checkerboard pattern vs. uni-color pattern). This approach resembles the way countries use their national flags.

This approach does not require "extra" hardware at the grow-pad.

This approach is advantageous, in the sense that such ID marking can be implemented as a temporal marking. Such a temporal ID must be readable until the point in time when unit-operator 290 inserts grow-pad 210 to the grow-unit (cf. the attribute INSERT_TIME_POINT), but there is no need for the consumer to read this ID. Depending on the chemical composition of the color, the color may simply disappear during the grow phase (the color is water soluble, and there is plenty of water during grow). Or, the growing plants will simply overgrow the code and make it no longer visible. There is also a potential advantage in terms of data confidentiality.

Option B) Visual identification. Most of the seeds will have a color (e.g., white) that is different from the color of the grow-pad (e.g., brown). The arrangement of the seeds on the grow-pads can be used for coding PAD_ID, cf. arrangement 280-A. Of course, such coding does not provide a larger number range.

Option C) Visual identification. Bar Code, QR-code, cf. label 218 in FIG. 4A). The pad-manufacturer can add label 218 (with adhesive). Reading out by camera/computer (sensor modality) is possible.

Option D) Visual identification, cf. FIG. 4A. The manufacturer uses alphanumerical characters (such as Latin letter, and/or Arabic numbers). Reading out by camera/computer (sensor modality), by a user (operator, consumer), user modality). It is convenient to have the characters relatively large (to accommodate vision deficiencies of the operators).

It is advantageous to use either letters or numbers, to avoid mix up. The manufacturer can add the characters to the grow-pad directly (e.g., by paint) or via a label.

The skilled person knows appropriate measures to comply with safety standards in food industry (e.g., regarding the selection of the paint).

### Continuing with the feedback system theme

While the description has been focused on the first theme "unit-operation", the description now more and more shifts to the second theme "feedback system". Writing conventions remain unchanged and aspects for the operation can be aspects for the feedback, and vice versa. Using feedback is optional, and improves the efficiency to produce high-quality (and quantity) plants.

As mentioned, unit-operator 290-n removes the (post-grow) grow-pads (from the unit). It is convenient, but not required, that unit-operator 290-n may place these grow-pads to so-called trays. For simplicity, there is an assumption to have one grow-pad per tray. Unit-operator 290-n may identify the trays by a TRAY_ID.

Upon removing the pad from the unit, or upon harvesting, unit-operator 290 can assign a value for the PLANT_QUALITY_LEVEL_1 to (each) grow-pad (plant-pad to be more accurate, cf. FIG. 2). Alternatively, the value for PLANT_QUALITY_LEVEL_1 can be assigned with the help of sensor data (e.g., taking pictures in combination with image recognition). The value represents quality of the plant (on grow-pad 210 that turned into a plant-pad). The values can have different granularities, from binary values to values involving vectors.

Upon harvesting, grow-unit 200 can log the harvesting timestamp with reference to the PAD_ID (HARVEST_TIME_POINT). (It is noted that harvesting - removing the plants from the pad can also be performed by the consumer).

### Consuming

Consumer 390-c (index c = 1 to C) consumes the (at least one) grow-pad. Consuming should be understood as an umbrella term for a variety of activities. The description explains consuming together with the data that is obtained and exchanged mainly through computer 380-c.

Consumer 390-c receives the grow-pad from unit-operator 290 (optionally on the tray). As the plants are already grown, the status is given as "post-grow". From a different perspective, unit-operator 290 hands over multiple pads (optionally, on trays) to multiple consumers 390-c. Data attributes may represent this handover as well. HANDOVER (PAD_ID, CONSUMER_ID), HANDOVER (TRAY_ID, CONSUMER_ID). As HANDOVER refer to an action that may take only a couple of minutes, the handover time point can be recorded: HANDOVER_TIME_POINT. Identifying the consumer (CONSUMER_ID) is optional.

In some usage scenarios, unit-operator 290 may belong to a retail store, and handing over is more complex. unit-operator 290 may place the (removed) grow-pad to a shelve (no location tracking or the like, at REMOVE_TIME_POINT), and the grow-pad may stay there for a non-specified waiting time (STORAGE_AT_STORE_DURATION) until consumer 390-c physically moves the grow-pad from the shelf. A couple of minutes later, the grow pad (or the tray) is then processed by a point-of-sales computer (POS computer). (The duration can be calculated from that data as well).

A possible data connection from grow-unit 200 (data exchange of HARVEST_TIME-POINT of PAD_ID) and POS allows the determination of the grow-pad specific STORAGE_AT_STORE_DURATION. With a maximum STORAGE_DURATION_MAX > STORAGE_AT_STORE_DURATION the freshness of the plant can be ensured at the POS.

Consumer 390-c physically transports the grow-pad (optionally on a tray) in a vehicle or the like to a preliminary storage location. For example, consumer 390-c uses a car or a bicycle and stores the grow-pad at home, in the refrigerator, on the balcony or elsewhere. Transport and storage conditions are expected to differ, and as used herein, data can represent them, and the skilled person is able like identification to attributes.

Consumer 390-c stores the grow-pads (optionally on the trays) for a period of time, usually a couple of hours or day as long as the plant remain fresh. Again, in terms of attributes, there would be a further, STORAGE_DURATION an a STORAGE_LOCATION = refrigerator at 4°C.

Consumer 390-c or any other person eats the plants (or at least part of them).

Consumer 390-c may throw the plants away.

Consumer 390-c may provide feedback information, PLANT_QUALITY_LEVEL_2 (to feedback distributor 690)

Consumer 390-c disposes off the tray (and the rest of the grow-pad). Consumer 390-c can repeat its function. For example, consumer 390-c can consume multiple pads at substantially the same time (i.e., in parallel). Consumer 390-c is given as a role that does not have to be performed by the same person.

### Quality, feedback and constraints

The desire to obtain plants at pre-defined quality (and quantity) remains unchanged, and - from a high-level perspective - the pad-manufacturer seek to improve the manufacturing process of the grow-pads, to improve the control instructions to the grow-units, to improve the design and the functionality of the grow-units. The unit-operator seeks to run the units as efficient as possible. The consumers seek to get grown plants at maximum quality level as well as shelf life.

Feedback information (i.e., data in a direction opposite to the grow-pad/plant flow, cf. FIG. 2 via distributor 690/680) assists the participants (i.e., the roles) at least in the following:
Pad-manufacturer 190 can adapt manufacturing by using feedback from the unit-operators (PLANT_QUALITY_LEVEL_1, e.g., specific instruction set for grow process leads to bad plant quality (maybe rotten)) and from the consumers (PLANT_QUALITY_LEVEL_2, e.g., regarding taste or freshness). In that sense, pad-manufacturer 190 can obtain feedback from two sources (i.e., from the operators, from the consumers).

Unit-manufacturer 590 can adapt the instructions by using feedback from the operators (e.g., regarding energy consumption ENERGY).

Unit-operator 280 can run the units with more efficiency, by using feedback from the consumers (e.g., PLANT_QUALITY_LEVEL_2).

The expert 490 can adapt the instructions by using feedback from the unit-operators (e.g., PLANT_QUALITY_LEVEL1).

The expert 490 can adapt the instructions by using feedback from the customers (e.g., PLANT_QUALITY_LEVEL_2).

The expert 490 can adapt the instruction by using feedback from the pad-manufacturer (e.g., adapted information about the grow process).

Even the consumers get best possible grown plants at each time (maximum quality level and availability, because of the steady updated grow process instructions).

Such multi-dimensional feedback scheme requires several data assignments, data transfer etc.

Feedback information can be aggregated. By way of example, feedback can be aggregated for grow-pads that had been transported (from pad-manufacturer 190 to unit-operator 290) at the same time, with the same plant sort, in the same box, etc.

As with every feedback loop, the timing and number of equal feedbacks regarding a particular BOX_ID play a role (intermediate granularity, related to batch and applicable to transport from pad-manufacturer 190 to unit-operator 290). Some feedback may require immediate reaction (e.g., when a consumer reports plants that are not suitable for eating), other feedback may be processed with more time (e.g., general feedback regarding taste).

For example, feedback aggregated from multiple consumers (received within relatively short time) may lead to call-back actions (or let unit-operators stop distributing the plants).

The skilled person can apply text processing (or other techniques) to identify feedback content (in case the feedback is provided as text). Collecting feedback by standardized user interfaces (apps in smartphones) is possible as well.

Although FIG. 2 illustrates feedback from right to left, feedback between different participants, information between similar participants can be useful as well.

As already explained for the grow-units, processing data is one approach. This may cause further constraints, especially when data has to be exchanged between participants.

The description now explains some further constraints, with the focus to constraints in the operator-consumer relation and further general constraints.

However, all constraints may be applicable to any feedback information. The description also provides an overview to possible solutions.

### Constraints in the operator-consumer relation

### (Identification linked to grow-unit being inserted)

(problem) The identification of a particular grow-pad (by location (x, y) is potentially lost when the grow-pad is being removed from the unit. The grow-pad (when leaving the unit) need to be identifiable, not necessarily by the consumer, but by the operator (or any other feedback receiving role).

(solution) Location (x, y) can be related to the identification of the tray (TRAY_ID). The Location is also related to the identification of the grow-pad (PAD_ID during the insertion process of the groped in the grow-unit). Therefor there is a link between TRAY_ID and PAD_ID.

(problem) Information regarding subjective topics (such as taste) can usually not be provided by the unit-operators. The unit-operators are not the consumers. Further, some of the information becomes available when the plant has been consumed. At "eating time", the identification of the tray may not be available (the tray has been disposed already).

(solution) In case the hand-over (grow-pad/tray from unit-operator to consumer) occurs in a retail environment, the following may be applied:
- providing a specific code to the tray (e.g., as visual code: bar-code, QR-code), providing at substantially any stage (manufacturing the tray, using the tray to transport the pads with the plants, etc.)
- reading the code at the point of sale (POS) and thereby associating the code to a particular consumer (potentially with identifying the consumer to the unit-operator

(alternative solution) The tray carries an ID and the tray is designed to be reusable and a deposit is charged. With this the consumer takes care of the tray and has access to the tray ID at home, at "eating time". Further details to the solution will be given below.

(alternative solution) There is a link between the TRAY_ID and the PAD_ID, see above.

(further alternative solution). In view of FIG. 4B, arrangements 270-A, 270-B, 270-C and 270-D should be available even of the "seed-pad" has turned to a "plant-pad" and even thereafter when the plants have been harvested (removed from the pad). It is contemplated to let the consumer take an image of the plant (potentially from both sides) and let an image processing computer read out the PAD_ID from that image (for example, implemented in computer 680).

### (Data privacy)

(Problem) Consumers may be sensitive to disclose personal data, and there are legal provisions to be applied. Technically, some of the data-processing may apply well-known measures such as replacing names by pseudonyms or tokens. However, there might still be technical options to retrieve personal data.

(solution) Anonymous feedback is possible, and personal data may not be relevant.

### (Multiple operators)

(problem) A particular consumer may obtain two or more trays from different unit-operators, but feedback information would have to take the difference into account. Feedback information directed to the unit-manufacturer should go to the unit-manufacturers, but feedback information directed to the unit-operator should go to the correct one (i.e., to a particular unit operator).

(solution) Feedback would be directed only to the (pad/unit) manufacturer. Feedback with is relevant for the unit-operator will be forwarded by manufacturer (on the basis of the PAD_ID and/or TRAY_ID.

### (Imbalance)

(problem) While the unit-manufacturer may provide detailed instructions to the unit-operators (and may even monitor the operators), such supervision does not apply to the unit-operators (and the grow-unit-manufacturer) in their relation to the consumers. This potentially leads to an imbalance in data processing.

The consuming activities (such as transporting, storing) may influence the quality.
- For example, transporting trays by car over a relatively long distance is different from transporting similar trays just around the corner by bicycle.
- For example, storing trays in the refrigerator may keep the alpha plants longer fresh, but may harm the beta plants.

(Solution) In terms of feedback, attributes that TRANSPORT, STORAGE would have to be considered. This may also be relevant for collecting historical data.

### (Lack of sensors)

(problem) The grow-unit have sensors that, for example, identify the grow-pads (cf. PAD_ID) However, the consumer does not have such sophisticated hardware. Location-specific identification (x, y) is not suitable for the consumer, because the grow-pad has been removed. The consumers use off-the-shelf devices (such as smartphones), that can read visual codes (such as bar-code or QR-code, or transmit images). Alternatively, consumer 390-s may use a telephone.

However, there might be multiple codes on the tray (a first bar code for POS, a second bar code to identify the grow-pad).

(solution) There is a link between the TRAY_ID and the PAD_ID, cf. above.

### (Different data formats)

(Problem) After removal from the grow-unit, the plants (pads, optionally on trays) may be stored for a relatively short time period (minutes, hours in the mentioned shelves) during that the environment may harm the plant. For example, in a shop ... The time interval between REMOVE_TIME_POINT and HANDOVER_TIME_POINT, but data for both time points may be stored in different computer systems. REMOVE_TIME_POINT may be recorded by computer 280-n, and HANDOVER_TIME_POINT may be recorded by the POS computer. However, although both the POS computer may logically belong to the computer 280-n (because it is operated by unit-operator 290-n), the POS computer may be a computer with different data conventions.

(Solution) Solution described above, keywords: HARVEST_TIME_POINT, STORAGE_AT _STORE_DURATION, STORAGE_DURATION_MAX

### (Complexity for the consumer)

(problem) Consumers 390-c do not only consume the plants but they can provide information (feedback, via data processing implemented by computers 180, 280 to pad-manufacturer 190, direct / indirect, and to other roles such as to expert 490, via 490), but the consumers are not necessarily the experts. They may not be aware of the differences between plant sorts. For example, alpha plants may be confused with beta plants.

(solution) The consumer may scan visual information (bar code, QR-code) or may take an image. Information regarding the plant sort and the like is available, by tracing back, for example, from the TRAY_ID (if used) to PAD_ID (related to sort of plant), as already explained.

### (Complexity)

(problem) The consumer may refrain from navigating through websites, and the consumer may not be able to properly identify particular unit-operator 280-n.

(solution) Usage of location services on the consumers device in combination of sorting the list of unit-operators with respect to their geographical closeness to the consumer (s device) (web based service on the website).

(Alternative solution) Using history of visited locations of consumers device for matching nearest unit-operators (web based service) is possible as well.

### (Tracing, Tracking)

(problem) The consumer may want to have information regarding the grow phase, but not at the level of general statements (such as "no XXX used") but at a more detailed level. Attributes are available (e.g., attribute SUBSTANCES), but the unit-operator does not want to disclose all attributes. Further, providing data regarding a particular grow phase (for particular pads) requires a chain of inter-linked IDs.

(solution) There is a link between the TRAY_ID and the PAD_ID, see above. With this link the customer can retrieve information of the PAD provided by the pad-manufacturer using the TRAY_ID.

(alternative solution) Selected information regarding the grow phase can be provided by the unit-operator with the help of the TRAY_ID (which is linked to the PAD_ID).

### (Mechanics)

(problem) The grow-pad should remain in up-right position, visually inspecting the tray (with the grow-pad, bottom-side) is not to be expected by consumer 390-c.

Solutions are contemplated in the following
- For units 200 that are located in supermarkets, point of sale POS data can be used, to track what particular grow-pad 210 was handed over to what particular consumer.
- Consumers can use the devices (smartphone) to obtain an identification of the grow-pad. (There are even two options: to have different ID for a grow-pad before and after consumption).
- Bypassing unit-operator 290, by establishing direct contact between pad-manufacturer 190 and consumer 390 (cf. feedback distribution in role 490 that channels the data).
- Consumers can take images (photos) of the plant, and optionally can take photos of the environment in the plants are consumed. Image processing by computers can be applied.
- TRAY_ID can be laterally located on the tray (e.g., by a label at a side-wall of the tray).

Advantages from such approaches may result in synergy. For example, grow-pad identification required by unit-operator 290 (PAD_ID), can be used by consumer 390 in the communication with pad-manufacturer 190 (or any other feedback channel via 490). Plausibility checks as possible, for example, the harvesting time is known (by operator 290, or removal time), and feedback should arrive within a certain time interval.

### General constraints

### (Amount of data)

(problem) The amount of data rises proportionally to the number N of units (in the fleet). For example, attributes are available not only for particular locations (x, y), at particular points in time t, and for particular pads p (ATTRIBUTE (x, y | t| p)) but also multiple grow-units (n = 1 to N). Data processing may therefore be ..

(solution) In the moment a grow-pad is being inserted to (particular) grow-unit 200-n, the grow-pad is no longer a grow-pad among many others (such as the grow-pad, in same box, BOX_ID), but a grow-pad placed at a particular location LOC of a particular grow-unit 200-n.

This is advantageous, because unit-operator 290 may insert the grow-pads to positions at random. Further, the identification (a grow-pad from a particular box to a particular location) is created in the moment the grow-pad is being inserted, not earlier.

### (ID break)

(problem) Due to different identification schemes (e.g., grow-pad identification, customer identification), feedback information can not rely on a single identification number of the like

(Solution) Consistent ID links (saved in database). Logical data checks: e.g. for IDs, related to pads manufactured years ago, giving feedback is not possible.

(Alternative solution) Feedback information rely on the TRAY_ID (which is linked to PAD_ID, see description above)

### (Feedback with different recipients)

(problem) In a multi-dimensional feedback scheme, feedback information has to reach the recipient that can react (in role terms: expert 490, pad-manufacturer 190, unit-manufacturer 590, via feedback distributor 690), but feedback information from the consumer may be of use for either role (e.g., the unit-manufacturer or the unit-operators). Therefore, feedback information must be channeled.

(solution) A centrally operated database enables for channeling the feedback information, the description uses the feedback distributor 690 as a role, FIG. 2.

### (Lack of ID hardware)

(problem) Visual information on the grow-pad is difficult to implement. For example, the grow-pad has a surface that is suitable for holding seeds and plants. But printing bar codes or QR-codes directly to that surface appears difficult, even impossible. Visual information can be added to the tray but the tray is not always associated with the grow-pad, and data associations may be challenging.

Activities such as inserting the grow-pad to the grow-unit (or removing it) and consuming are performed by humans. Visual information may be error-prone, even if reading out is computer-assisted.

Non-visual information may require the use of techniques that disturb the consumption. For example, the use of RFID/NFC tags may be restricted for the grow-pads to avoid the mentioned hazards. RFID/NFC tags may be added to the trays, but - as mentioned - the tray is not always associated with the grow-pad,

(solution) There are two approaches, optionally, in combination.

First, the ID information is reduced to a number range for that appropriate coding is available, and the ID information may be enhanced by further data. For example, the grow-pads can have different colors (in the extreme case, two colors with an IDrange of only 2).

Second, intrinsic properties of the grow-pads can be used for identification as well. For example, the arrangement of the seeds (on the grow-pad) can be used to convey (code and decode) data

Further examples are explained in connection with FIGS. 4A and 4B.

(Alternative solution) There can be a link between TRAY_ID and PAD_ID, see description above.

### (Data carriers)

(problem) Shop operators hand over the grow-pads together with transaction records from POS systems, but the records are usually handed over separately, and digital receipts are access protected. Further, receipts comprise a lot of data that is not relevant.

(solution) Whenever possible, the grow-pads/trays are used as data carriers or have a visible/readable ID (PAD_ID, TRAY_ID). In case that further data is use (such as data from credit cards, bank cards or POS in general), non-relevant but sensitive information can be removed before data reaches feedback role 690.

### Feedback processing overview

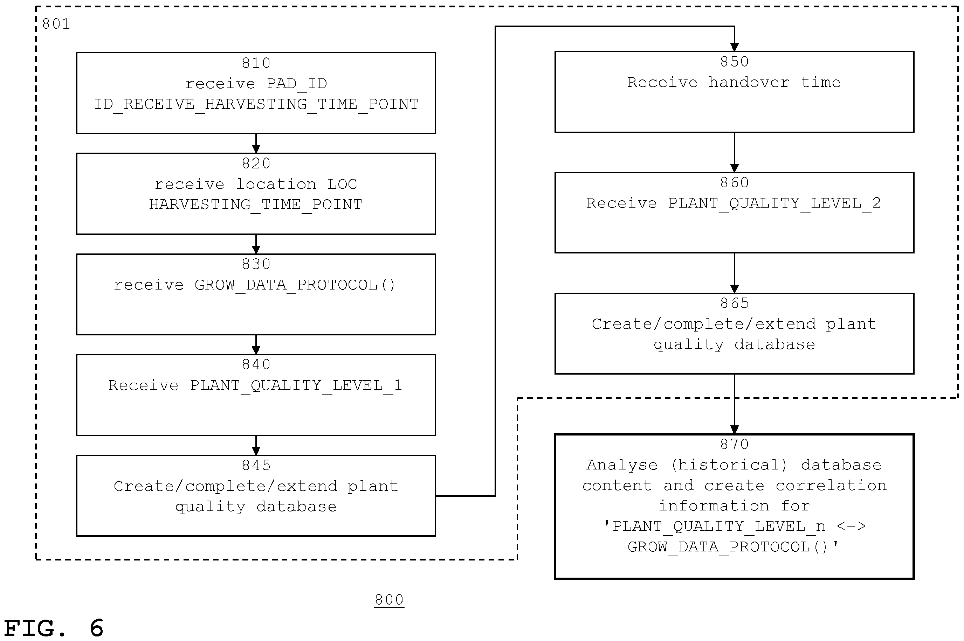

FIG. 6 illustrates a flow-chart diagram in an overview to collecting and distributing feedback. The overview if provided as a computer-implemented method 800.

In step 810, the computer receives PAD_ID and also receives ID_RECEIVE_HARVESTING_TIME_POINT as the time by that operator removed the grow-pad from the unit (alternatively, the harvesting time, removing plants)

In step 820, the computer receives location LOC (applicable for that time point)

In step 830, the computer receives a protocol with grow data (GROW_DATA_PROTOCOL), such as readings from sensors, actions by actuators, with time-stamps, etc. from inserting the pad to removing the pad, optionally individual data per location LOC.

In step 840, the computer receive feedback information from unit operator 290, here summarized by the above-mentioned PLANT_QUALITY_LEVEL_1

In step 845, the computer writes the data (that has been collected so far) to a database, here: plant quality database.

In step 850, the computer receives the HANDOVER_TIME (the pad is being handed over to the consumer, in the shop for example).

In step 860, the computer receives the feedback from the consumer, here summarized by the above-mentioned PLANT_QUALITY_LEVEL_2.

In step 865, the computer again updates the database (plant quality database), here with the feedback data from the consumer.

The computer performs steps 810 to 865 in repetitions, so that over time (multiple executions), the database has data that can be further processed. The repetitions (or parallel execution) are illustrated by a dashed frame 801.

In optional step 870, the computer performs analysis of the available data (that could be called historical data). In the example of FIG. 6 the analysis comprises the correlation of PLANT_QUALlTY_LEVEL data (level 1, level 2) for multiple grow instances with the grow data (GROW_DATA), from the protocols (of step 830).

The computer can detect correlations and the results can be used as aggregated feedback (to experts 490 for example). By way of example, there could be a correlation between the amount to water (supplied to the plants) and the quality feedback (in steps 840, 860), so that expert 490 can adjust instructions 485 (cf. FIG. 2) accordingly.

The step sequence can be modified. For example, steps 810/820/830/840 (for feedback at LEVEL_1) and 850/860/ (LEVEL_2) may be performed separately so that steps 845/865 would be the final step in such level-specific sub-sequences.

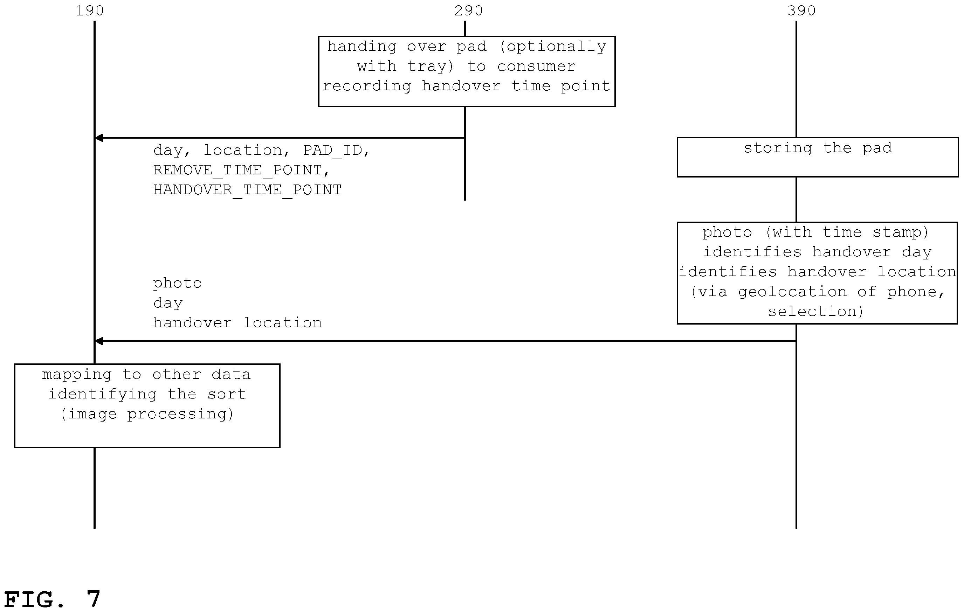

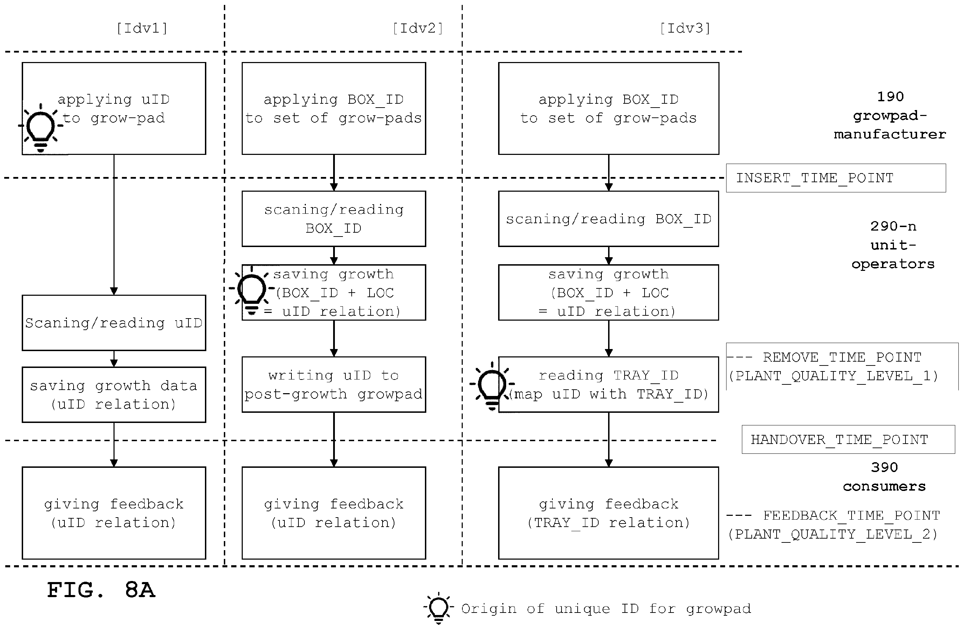

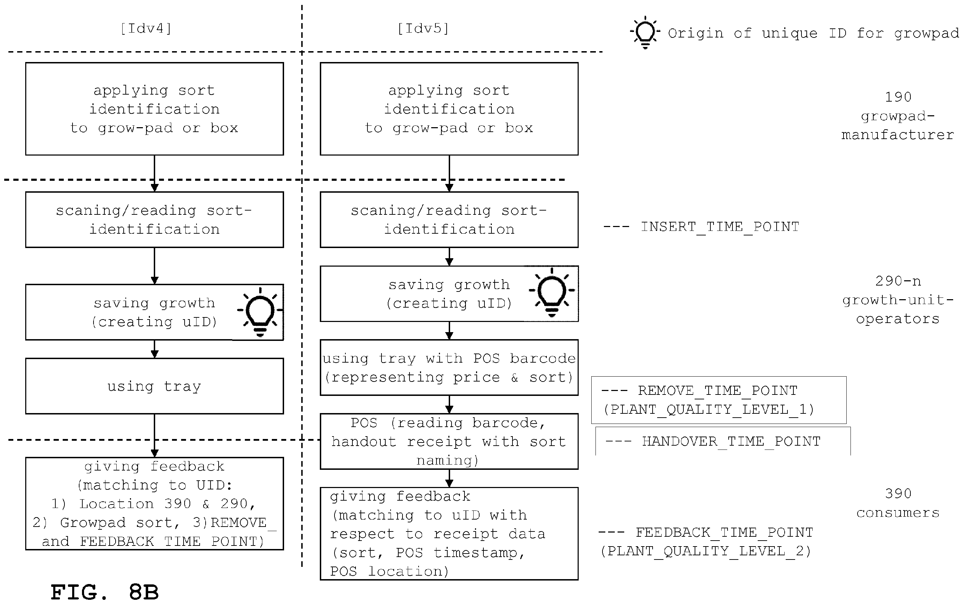

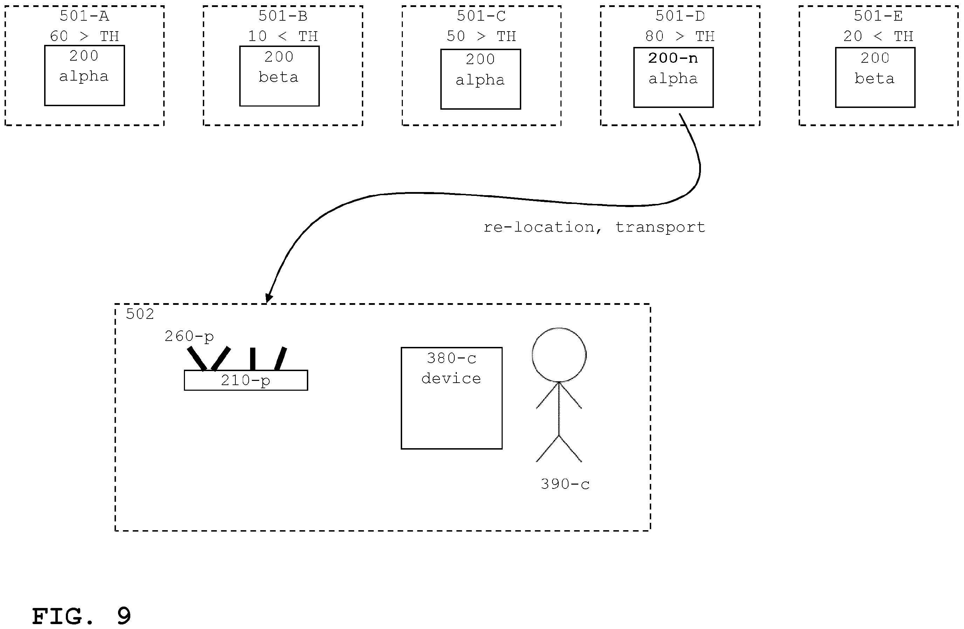

It is noted that not all steps have to be performed (for example, feedback from unit-operators 290 can be skipped). While FIG. 6 does not refer to ID information, the description gives further (optional) details in FIGS. 7, 8A, 8B and in FIGS. 9-10.

### Feedback data processing

FIG. 7 illustrates, by way of example, a flow-chart diagram for data processing (and mapping) that accompanies the handover to the consumer and that accompanies feedback.

FIGS. 8A and 8B illustrates, by way of example, possible ID chains for giving feedback by consumer. The steps are illustrated in swim-lane fashion, for pad-manufacturer 190, unit-operator 290 and consumer 390 (from left to right in FIG. 7 and from top to bottom in FIG. 8A and FIG. 8B). Feedback should go to pad-manufacturer 190 and unit-manufacturer 590, but the data processing can be adapted to different feedback recipients (that are not depicted in the FIG. 7, 8A and 8B). It is noted that grow-pads have already turned from seed-pads to plant-pads (post-grow).

In a realistic scenario, unit-operator 290 is identical with the unit-operator of a shop in any city, and consumer 390 is a customer of that shop. Computers 180, 280, 380 should be available as introduced above.

On any timestamp REMOVE_TIME_POINT (includes the date as well as the hour or minute, or in other words timestamp), the unit-operator removes a number of plant-pads of different sorts from a grow-unit and places them for sale in trays. Looking at the data, computer 280 tracks/logs the removal of the grow-pad at location LOC at the timestamp time REMOVE_TIME_POINT.

With the attribute SORT (LOC, REMOVE_TIME_POINT) the sort of the plant-pad is known by computer 280 and is also been tracked/logged. Within a defined period of time after REMOVE_TIME_POINT, a consumer visits the shop and buys one or more of the removed grow-pads of different sorts.

The timestamp HANDOVER_TIME_POINT of the handover-process (completed purchase process, POS) is noted on the receipt/sales slip of the shop as well as the location of the shop (address) and handed out to the consumer.

For the ID chain IDv5 the receipt has to include also the (plant) sort of the post-grow grow-pad.

At home, a particular consumer 390-c places it (storing step) in the refrigerator, and on Sunday evening, consumer 390-c realizes that the plants have changed their color. Consumer 390-c initiates the feedback by interacting with unit-operator computer 280, or with pad-manufacturer computer 180. In terms of FIG. 2, consumer 390-c interacts with computer 680 (feedback distributor 690).

(cf. ID chain IDv4, FIG. 8B) There are different scenarios for using or matching identifications of (post-grow) grow-pads so that a consumer 390-c can give feedback. All activities lie with the consumer, and can at most be supported but not fully automated:
1) [IDv1, IDv2] Using/reading a unique PAD_ID applied directly to the grow-pad (e.g., by taking a photo for visible pad identification (cf. FIG. 4A and FIG. 4B) or a reader/scanner for device 217 placed on or within the grow-pad (cf. FIG. 4A).
2) [IDv3] Using/reading an ID located on a tray (e.g., procedure cf. see above 1))
3) [IDv4] Using a webservice for location, sort and timestamp determination and mapping.
   a. Consumer location identification can be done by manual selection of address (parts).
   b. Consumer location identification can be done by location based service on consumer device (smartphone, by GPS or otherwise).
   c. Unit-operator 290/shop location identification can be done by a manual selection of address. This procedure can be supported by the consumer location and a nearest shop mapping.
   d. Unit-operator 290/shop location identification can be done by location based service on consumers device (smartphone). This procedure can be supported by the consumer location and a nearest shop mapping.
   e. Sort identification can be done by manual selection.
   f. Sort identification can be done by taking a photo and image recognition.
   g. Sort identification can be done by manual selection with the help of the receipt.
   h. Sort identification can be done by taking a photo from the receipt
   i. FEEDBACK_TIME_POINT is the only parameter which can be taken automatically by the used consumers device (computer, smartphone)

PLANT_QUALITY_LEVEL_2 can be given by the consumer by manual rating selection (e.g., from dropdown 1 to 5 stars), by taking a photo und submitting it (backend image processing for performing rating 1-5 stars), or otherwise.

### Alternative scenarios

The description is simplified, and the feedback distributor 690 can introduce further steps, such as consistency checks. (for example, no feedback photo accepted for handover a week ago).

Assumptions regarding time points can be made as follows:
- FEEDBACK_TIME_POINT is approximately the same as the CONSUME_TIME_POINT
- FEEDBACK_TIME_POINT is later then HANDOVER_TIME_POINT
- FEEDBACK_TIME_POINT is later than REMOVE_TIME_POINT
- The interval between REMOVE_TIME_POINT and FEEDBACK_TIME_POINT is less than a pre-defined number of days DD.
- The interval between REMOVE_TIME_POINT and HANDOVER_TIME_POINT is less than a pre-defined number of hours HH.

### Timing

In some aspects, the operation of the units could be compared to the operation of and computer processor with a pipeline. The units has already delivered pads (to users), but they continue to grow plants on (further) pads.

Information becomes available at particular points in time. Information regarding quality may not be used to "repair" a grow-pad (at the consumer site) but may be used to improve quality for the grow-pads that are still in the units. In other word, some feedback information needs to arrive in real-time so that - for pads being in the units - correction can be applied.

### Identifying a particular grow unit

FIG. 9 illustrates a plurality of grow units at different locations, as well as illustrates consumer 390 providing feedback.

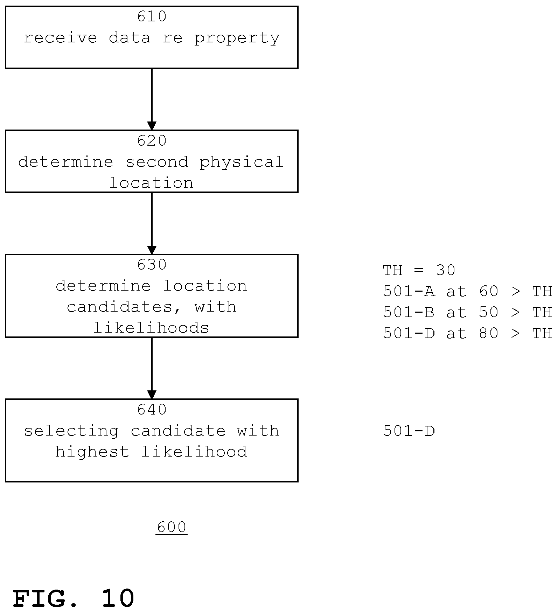

FIG. 10 illustrates a flow-chart diagram of computer-implemented method 600 to identify a particular grow-unit in that a particular grow-pad had been cultivated.

By performing method 600, a computer (such as computer 680, cf. FIG. 2) identifies a particular grow-unit 200-n in that a particular grow-pad 210-p with at least one plant 260-p had been cultivated from seeds (215 cf. FIG. 4B). Particular grow-unit 200-n is located at a particular first physical location 501-D and particular grow-pad 210-p has previously been transported after separation from particular grow-unit 200-n to a second physical location 502. (For example, the first location is the shop (that runs a grow unit) and the second location is the current location of the customer).

As in FIG. 9, physical locations 501, 502 are geographical locations (not locations within unit 200) and are illustrated by dashed lines.

In step receiving data 610, the computer receives data that represents a property of the particular grow-pad 210-p or of the particular plant 260-p, from a computing device 380-c (cf. FIG. 9) that is operated by a computer user 390-c (consumer, in FIGS. 2 and 9).

In step determining 620, the computer determines the second physical location 502 as the physical location of computing device 380-c.

In step determining 630, the computer determines location candidates (here illustrated as 501-A, 501-C, 501-D for the first location. The location candidates are associated with a threshold-exceeding likelihood (>TH) that plants 260 corresponding to the particular property have been relocated from the candidate locations 501-A, 501-B, 501-D to the second location 502. (The figure also illustrates locations 502-2, 501-E that are no candidates, because TH is too small.)

In step selecting 640, the computer selects the particular location candidate 501-D with the highest likelihood (here "80>TH") to identify the particular grow-unit 200-n being the grow-unit at that first location 501-D.

More in detail, particular grow-pad 210-p may have been transported to second physical location 502 within a pre-defined relocation time interval T_max, and the threshold-exceeding likelihood >TH is a likelihood of relocation within the relocation time interval T_max.

Relocation time interval (T_max) can be a pre-defined time interval that corresponds to the time is takes the grown plant to lose their rigidity. (The consumer may have transported "old" plants previously, but the feedback should be available to "young" plants.)

Selecting the location candidate with the highest likelihood can be performed by any of the following:
- interacting with user 390-c of the computing device 380-c with presenting the location candidates for the first location to the user at an interface of the computing device 380-c and receiving the selection from the consumer (390-c) of a particular first location; and
- searching in the computing device 380-c for data that traces to location candidates;
- searching in the computing device (380-c) for data that represents hand-over transactions.

Receiving data (cf. step 610) that represents a property of particular grow-pad 210-p can comprise any of the following:
- receiving an image taken by a camera of computing device 380-c from particular grow-pad 210-p (or from the particular plant 260-p) and processing the image to identify the plant sort (alpha, beta, gamma);
- receiving a code that is associated with a package or tray in that the item has been located or is being located; and
- receiving an image taken by the camera of the computing device 380-c from the particular grow-pad 210-p or from the particular plant 260-p and processing the image to identify an arrangement 270 (cf. FIG. 4B) of sensor-visible items 270-A, 270-B, 270-C, 270-D on the surface of particular grow-pad 210-p. As explained above, arrangement 270 codes an identification of a particular grow-pad PAD_ID.

In case of arrangement 270-A, the sensor-visible items are the traces of the seeds (the seeds do not have to be present for the grown plant any longer). The traces can also be formed by the plant (of by plant parts that remain on the pad after harvesting).

Determining the second physical location 501 (as in step 620) can comprise, selected from the following:
- accessing the current geo-location data of the device 380-c operated by the computer user 390-c; and
- interacting with computer user 390-c via a user interface to read data from documents that are related to the handover at the first location (such as POS documents).

Determining location candidates (in step 630) can comprise to rank the likelihoods that the item has been transported from a candidate first location 501-A, 501-C, 501-D to second physical location 502 (by the consumer), with processing: the identification of the transport vehicle type, an estimation of the transport route, or an estimation of the physical distance (for example, a location 501 may not qualify for a candidate if it would be too far for a bicycle trip to location 502, the shortest distance may be that for cars via a bridge that is blocked for bicycles, etc.).

Determining location candidates may comprises to access a look-up table that maps location candidates to the determined second locations.

Determining location candidates may comprise to access a log that identifies the plurality of items that have been processed by grow-units 200 at the candidate first physical locations.

Having identified the particular grow-unit, feedback distributor 690 is able to forward the feedback (e.g., PLANT_QUALITY_LEVEL_2). The granularity can be sufficient for many feedback applications (not identification of the particular pad may be required). It is also possible to use approaches in FIGS. 8A, 8B to have to sharpen the resolution to individual pads.

### Use of the identification

As mentioned above (introduction to feedback), the identification (by method 600 or otherwise) of particular grow-unit 200-n can be used establish a data-connection between computing device 380-c and a computer that is associated with the identified particular grow-unit 200-n, to collect feedback data from the computer user 390-c. Depending on the content of the feedback, the associated computer can be, for example, computer 280/220, computers 180, 480, 580 (to improve the pads, the instructions, or the units).

### Identification from processing an image of the arrangements

It is also possible to apply a computer-implemented method to identify a particular grow-pad 210-p with plants 260 that had been grown from seeds 215 previously embedded into the particular grow-pad. The method comprises to receive an image taken by a camera from the particular grow-pad (as explained above) and to process the image to identify an arrangement 270 of sensor-visible items 270-A, 270-B, 270-C, 270-D on the surface of the particular grow-pad (cf. FIG. 4B, i.e., also camera-visible). Arrangement 270 codes the identification PAD_ID of the particular grow-pad 210-p. The sensor-visible items (270-A, 270-B, 270-C, 270-D) can be traces of seeds 215, even of the plant has been harvested already.

### Generic computer

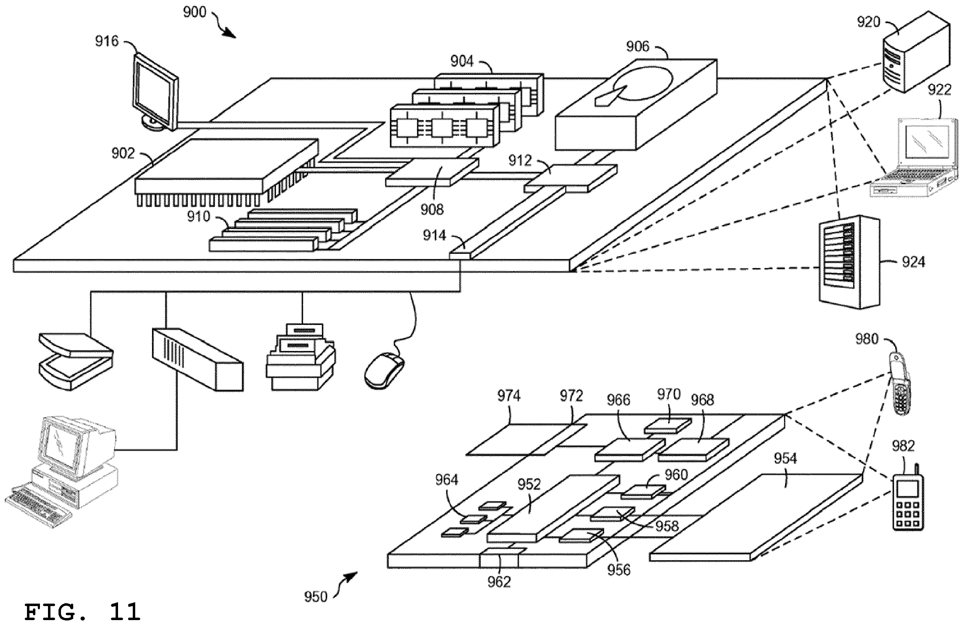

FIG. 11 illustrates an example of a generic computer device which may be used with the techniques described here. FIG. 11 is a diagram that shows an example of a generic computer device 900 and a generic mobile computer device 950, which may be used with the techniques described here. Computing device 900 is intended to represent various forms of digital computers, such as laptops, desktops, workstations, personal digital assistants, servers, blade servers, mainframes, and other appropriate computers. Computing device 950 is intended to represent various forms of mobile devices, such as personal digital assistants, cellular telephones, smart phones, driving assistance systems or board computers of vehicles and other similar computing devices. For example, computing device 950 may be used as a frontend by a user to interact with the computing device 900. The components shown here, their connections and relationships, and their functions, are meant to be exemplary only, and are not meant to limit implementations of the inventions described and/or claimed in this document.

Computing device 900 includes a processor 902, memory 904, a storage device 906, a high-speed interface 908 connecting to memory 904 and high-speed expansion ports 910, and a low speed interface 912 connecting to low speed bus 914 and storage device 906. Each of the components 902, 904, 906, 908, 910, and 912, are interconnected using various busses, and may be mounted on a common motherboard or in other manners as appropriate. The processor 902 can process instructions for execution within the computing device 900, including instructions stored in the memory 904 or on the storage device 906 to display graphical information for a GUI on an external input/output device, such as display 916 coupled to high speed interface 908. In other implementations, multiple processors and/or multiple buses may be used, as appropriate, along with multiple memories and types of memory. Also, multiple computing devices 900 may be connected, with each device providing portions of the necessary operations (e.g., as a server bank, a group of blade servers, or a multi-processor system).

The memory 904 stores information within the computing device 900. In one implementation, the memory 904 is a volatile memory unit. In another implementation, the memory 904 is a non-volatile memory units. The memory 904 may also be another form of computer-readable medium, such as a magnetic or optical disk.

The storage device 906 is capable of providing mass storage for the computing device 900. In one implementation, the storage device 906 may be or contain a computer-readable medium, such as a floppy disk device, a hard disk device, an optical disk device, or a tape device, a flash memory or other similar solid state memory device, or an array of devices, including devices in a storage area network or other configurations. A computer program product can be tangibly embodied in an information carrier. The computer program product may also contain instructions that, when executed, perform one or more methods, such as those described above. The information carrier is a computer- or machine-readable medium, such as the memory 904, the storage device 906, or memory on processor 902.

The high speed controller 908 manages bandwidth-intensive operations for the computing device 900, while the low speed controller 912 manages lower bandwidth-intensive operations. Such allocation of functions is exemplary only. In one implementation, the high-speed controller 908 is coupled to memory 904, display 916 (e.g., through a graphics processor or accelerator), and to high-speed expansion ports 910, which may accept various expansion cards (not shown). In the implementation, low-speed controller 912 is coupled to storage device 906 and low-speed expansion port 914. The low-speed expansion port, which may include various communication ports (e.g., USB, Bluetooth, Ethernet, wireless Ethernet) may be coupled to one or more input/output devices, such as a keyboard, a pointing device, a scanner, or a networking device such as a switch or router, e.g., through a network adapter.

The computing device 900 may be implemented in a number of different forms, as shown in the figure. For example, it may be implemented as a standard server 920, or multiple times in a group of such servers. It may also be implemented as part of a rack server system 924. In addition, it may be implemented in a personal computer such as a laptop computer 922. Alternatively, components from computing device 900 may be combined with other components in a mobile device (not shown), such as device 950. Each of such devices may contain one or more of computing device 900, 950, and an entire system may be made up of multiple computing devices 900, 950 communicating with each other.

Computing device 950 includes a processor 952, memory 964, an input/output device such as a display 954, a communication interface 966, and a transceiver 968, among other components. The device 950 may also be provided with a storage device, such as a microdrive or other device, to provide additional storage. Each of the components 950, 952, 964, 954, 966, and 968, are interconnected using various buses, and several of the components may be mounted on a common motherboard or in other manners as appropriate.

The processor 952 can execute instructions within the computing device 950, including instructions stored in the memory 964. The processor may be implemented as a chipset of chips that include separate and multiple analog and digital processors. The processor may provide, for example, for coordination of the other components of the device 950, such as control of user interfaces, applications run by device 950, and wireless communication by device 950.

Processor 952 may communicate with a user through control interface 958 and display interface 956 coupled to a display 954. The display 954 may be, for example, a TFT LCD (Thin-Film-Transistor Liquid Crystal Display) or an OLED (Organic Light Emitting Diode) display, or other appropriate display technology. The display interface 956 may comprise appropriate circuitry for driving the display 954 to present graphical and other information to a user. The control interface 958 may receive commands from a user and convert them for submission to the processor 952. In addition, an external interface 962 may be provide in communication with processor 952, so as to enable near area communication of device 950 with other devices. External interface 962 may provide, for example, for wired communication in some implementations, or for wireless communication in other implementations, and multiple interfaces may also be used.

The memory 964 stores information within the computing device 950. The memory 964 can be implemented as one or more of a computer-readable medium or media, a volatile memory units, or a non-volatile memory units. Expansion memory 984 may also be provided and connected to device 950 through expansion interface 982, which may include, for example, a SIMM (Single In Line Memory Module) card interface. Such expansion memory 984 may provide extra storage space for device 950, or may also store applications or other information for device 950. Specifically, expansion memory 984 may include instructions to carry out or supplement the processes described above, and may include secure information also. Thus, for example, expansion memory 984 may act as a security module for device 950, and may be programmed with instructions that permit secure use of device 950. In addition, secure applications may be provided via the SIMM cards, along with additional information, such as placing the identifying information on the SIMM card in a non-hackable manner.

The memory may include, for example, flash memory and/or NVRAM memory, as discussed below. In one implementation, a computer program product is tangibly embodied in an information carrier. The computer program product contains instructions that, when executed, perform one or more methods, such as those described above. The information carrier is a computer- or machine-readable medium, such as the memory 964, expansion memory 984, or memory on processor 952 that may be received, for example, over transceiver 968 or external interface 962.

Device 950 may communicate wirelessly through communication interface 966, which may include digital signal processing circuitry where necessary. Communication interface 966 may provide for communications under various modes or protocols, such as GSM voice calls, SMS, EMS, or MMS messaging, CDMA, TDMA, PDC, WCDMA, CDMA2000, or GPRS, among others. Such communication may occur, for example, through radio-frequency transceiver 968. In addition, short-range communication may occur, such as using a Bluetooth, WiFi, or other such transceiver (not shown). In addition, GPS (Global Positioning System) receiver module 980 may provide additional navigation- and location-related wireless data to device 950, which may be used as appropriate by applications running on device 950.

Device 950 may also communicate audibly using audio codec 960, which may receive spoken information from a user and convert it to usable digital information. Audio codec 960 may likewise generate audible sound for a user, such as through a speaker, e.g., in a handset of device 950. Such sound may include sound from voice telephone calls, may include recorded sound (e.g., voice messages, music files, etc.) and may also include sound generated by applications operating on device 950.

The computing device 950 may be implemented in a number of different forms, as shown in the figure. For example, it may be implemented as a cellular telephone 980. It may also be implemented as part of a smart phone 982, personal digital assistant, or other similar mobile device.

Various implementations of the systems and techniques described here can be realized in digital electronic circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor, and can be implemented in a high-level procedural and/or object-oriented programming language, and/or in assembly/machine language. As used herein, the terms "machine-readable medium" and "computer-readable medium" refer to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

To provide for interaction with a user, the systems and techniques described here can be implemented on a computer having a display device (e.g., a CRT (cathode ray tube) or LCD (liquid crystal display) monitor) for displaying information to the user and a keyboard and a pointing device (e.g., a mouse or a trackball) by which the user can provide input to the computer. Other kinds of devices can be used to provide for interaction with a user as well; for example, feedback provided to the user can be any form of sensory feedback (e.g., visual feedback, auditory feedback, or tactile feedback); and input from the user can be received in any form, including acoustic, speech, or tactile input.

The systems and techniques described here can be implemented in a computing device that includes a back end component (e.g., as a data server), or that includes a middleware component (e.g., an application server), or that includes a front end component (e.g., a client computer having a graphical user interface or a Web browser through which a user can interact with an implementation of the systems and techniques described here), or any combination of such back end, middleware, or front end components. The components of the system can be interconnected by any form or medium of digital data communication (e.g., a communication network). Examples of communication networks include a local area network ("LAN"), a wide area network ("WAN"), and the Internet.

The computing device can include clients and servers. A client and server are generally remote from each other and typically interact through a communication network. The relationship of client and server arises by virtue of computer programs running on the respective computers and having a client-server relationship to each other.

A number of embodiments have been described. Nevertheless, it will be understood that various modifications may be made without departing from the spirit and scope of the invention.

In addition, the logic flows depicted in the figures do not require the particular order shown, or sequential order, to achieve desirable results. In addition, other steps may be provided, or steps may be eliminated, from the described flows, and other components may be added to, or removed from, the described systems.

Accordingly, other embodiments are within the scope of the following claims.

### References

- 180: computer in use by the pad-manufacturer
- 190: pad-manufacturer
- 200: grow-unit
- 200-n: particular grow-unit, with index n
- 210: grow-pad(s)
- 210-p: particular grow-pad, with index p with identification PAD_ID
- 215: seeds
- 217: electronic device mounted on a grow-pad
- 218: label on a grow-pad
- 220: control device, i.e., a computer (inside grow-unit)
- 220-n: control device of particular grow-unit
- 230: sensors (inside grow-unit)
- 231: control signal (to sensors)
- 240: actuators
- 241: control signal (to actuators)
- 250: grow-pad location(s)
- 251: connector (pad to location)
- 250-LOC: particular location of a grow-pad
- 260: plant(s)
- 270: arrangement of sensor visible item
- 280, 280-n: (particular) computer, in use by the unit-operator
- 290, 290-n: (particular) unit-operator
- 380, 380-c: (particular) computer in use by (particular) consumer
- 390-c: (particular) consumer(s)
- 480: computer in use by expert
- 485, 485-n: instructions (index n points to a particular unit as recipient)
- 490: expert
- 501, 502: geographic locations
- 580: computer in use by unit-manufacturer
- 590: unit-manufacturer
- 600, 6xx: computer-implemented method, steps
- 680: computer of feedback distributor
- 690: feedback distributor
- 700, 7xx: computer-implemented method, steps
- 800, 8xx: computer-implemented method, steps
- 9xx: generic computer

### Attributes and acronyms

- ①② ...: reception modalities
- /1/, /2/...: modalities

- alpha, beta...: placeholder for particular plant sorts
- ID: data structure for identification
- ulD: unique ID
- IDv1, IDv2...: ID in different implementations (or variants v)
- ID1, ID2, ...: ID with different functions (in a chain)
- LOC: unique location within a grow-unit, in general for any coordinate
- n, p, c: indices that indicate pluralities of grow-units (n), grow-pads (p), and consumers (c)
- t: point in time
- TH: threshold (for likelihoods)
- TIME_POINT: point in time, identifiable by YYYYMMTTHH or more accurately.
- ulD: unique ID
- (x,y), (x,y,z): coordinate
- PAD_ID: ID of a particular grow-pad
- PAD_ID_SET: set of PAD_ID (i.e., plurality of PAD_ID)
- BOX_ID: ID of a particular box (transporting several grow-pads with similar attributes, such as same plant sort)
- PLAN_SORT TRAY_ID: ID of a specific tray, used by unit-operator to put in post-grow grow-pad

## Claims

1. Computer-implemented method (600) to identify a particular grow-unit (200-n) in that a particular grow-pad (210-p) with at least one plant (260-p) had been cultivated from seeds (215), wherein the particular grow-unit (200-n) is located at a particular first physical location (501-D) and wherein the particular grow-pad (210-p) has previously been transported after separation from the particular grow-unit (200-n) to a second physical location (502), the method (600) comprising:
receiving data (610) that represents a property of the particular grow-pad (210-p) or of the particular plant (260-p), from a computing device (380-c) that is operated by a computer user (390-c);
determining (620) the second physical location (502) as the physical location of the computing device (380-c);
determining (630) location candidates (501-A, 501-C, 501-D) for the first location, wherein the location candidates are associated with a threshold-exceeding likelihood that plants (260) corresponding to the particular property have been relocated from the candidate locations (501-A, 501-B, 501-D) to the second location (502);
selecting (640) the location candidate (501-D) with the highest likelihood to identify the particular grow-unit (200-n) being the grow-unit at that first location (501-D).

2. Method (600) according to claim 1, wherein the particular grow-pad (210-p) has been transported to the second physical location (502) within a pre-defined relocation time interval (T_max), and wherein the threshold-exceeding likelihood is a likelihood of relocation within the relocation time interval (T_max).

3. Method (600) according to claim 2, wherein relocation time interval (T_max) is a pre-defined time interval that corresponds to the time is takes the grown plant to lose their rigidity.

4. Method (600) according to any of the preceding claims, wherein selecting the location candidate with the highest likelihood is performed by any of the following:
interacting with a user (390-c) of the computing device (380-c) with presenting the location candidates for the first location to the computer user (390-c) at an interface of the computing device (380-c) and receiving the selection from the consumer (390-c) of a particular first location; and
searching in the computing device (380-c) for data that traces to location candidates;
searching in the computing device (380-c) for data that represents hand-over transactions.

5. Method (600) according to any of the preceding claims, wherein receiving data (610) that represents a property of particular grow-pad (210-p) comprises any of the following:
receiving an image taken by a camera of the computing device (380-c) from the particular grow-pad (210-p) or from the particular plant (260-p) and processing the image to identify the plant sort (alpha, beta, gamma);
receiving a code that is associated with a package or tray in that the item has been located or is being located; and
receiving an image taken by a camera of the computing device (380-c) from the particular grow-pad (210-p) or from the particular plant (260-p) and processing the image to identify an arrangement (270) of sensor-visible items (270-A, 270-B, 270-C, 270-D) on the surface of the particular grow-pad (210-p), wherein the arrangement (270) codes an identification of a particular grow-pad (PAD_ID).

6. Method (600) according to any of the proceeding claims, wherein determining the second physical location (501) comprises selected from the following:
accessing the current geo-location data of the computing device (380-c) operated by the computer user (390-c); and
interacting with the computer user (390) via a user interface to read data from documents that are related to the handover at the first location.

7. Method (600) according to any of the preceding claims, wherein determining (630) location candidates comprises to rank the likelihoods that the item has been transported from a candidate first location (501-A, 501-C, 501-D) to the second physical location by the consumer (390-c), with processing: the identification of the transport vehicle type, an estimation of the transport route, or an estimation of the physical distance.

8. Method (600) according to claim 7, wherein determining location candidates comprises to access a look-up table that maps location candidates to the determined second locations.

9. Method (600) according to claim 1, wherein determining (630) location candidates comprises to access a log that identifies the plurality of items that have been processed by grow-units (200) at the candidate first physical locations (501).

10. Use of the identification of the particular grow-unit (200-n), obtained by operating a computer with a computer-implemented method (600) according to any of claims 1-9 to establish a data-connection between the computing device (380-c) and a computer that is associated the identified particular grow-unit (200-n), to collect feedback data from the computer user (390-c).

11. Computer system that is adapted to perform the computer-executed method according to any of claims 1-9.

12. Computer program product that - when loaded into a memory of a computer and being executed by at least one processor of the computer causes the computer to perform the steps of the method according to any of claims 1-9.

13. Computer-implemented method to identify a particular grow-pad (210-p) with plants (260) that had been grown from seeds (215) previously embedded into the particular grow-pad (210-p), the method comprising:
receiving an image taken by a camera from the particular grow-pad (210-p); and
processing the image to identify an arrangement (270) of sensor-visible items (270-A, 270-B, 270-C, 270-D) on the surface of the particular grow-pad (210-p), wherein the arrangement (270) codes an identification (PAD_ID) of the particular grow-pad (210-p).

14. Method according to claim 13, wherein the sensor-visible items (270-A, 270-B, 270-C, 270-D) are traces of the seeds (215).
